# EUROPÄISCHE PATENTSCHRIFT

(11) **EP 1 565 810 B1**
(45) Veröffentlichungstag und Bekanntmachung des Hinweises auf die Patenterteilung: **27.06.2007**
(21) Anmeldenummer: 03785519.4
(22) Anmeldetag: 14.11.2003
(51) Int. Cl.: G06F 3/12

(54) **SYSTEM UND VERFAHREN ZUR AUTOMATISIERTEN ERZEUGUNG VON DRUCKBAREN DATEIEN AUS DATEN**
SYSTEM AND METHOD FOR THE AUTOMATIC GENERATION OF PRINTABLE FILES FROM DATA
SYSTEME ET PROCEDE DE PRODUCTION AUTOMATIQUE DE FICHIERS DE DONNEES IMPRIMABLES

(30) Priorität: 19.11.2002 DE 10254055
(43) Veröffentlichungstag der Anmeldung: 24.08.2005
(73) Patentinhaber: Deutsche Post AG, 53113 Bonn (DE)
(72) Erfinder: HOFMANN, Jürgen, 50968 Köln (DE)
(74) Vertreter: Jostarndt, Hans-Dieter
(86) Internationale Anmeldenummer: PCT/DE2003/003789
(87) Internationale Veröffentlichungsnummer: WO 2004/046907

(56) Entgegenhaltungen:
- WO-A-01/61466
- WO-A-02/21293

## Beschreibung

Die Erfindung betrifft ein System zur automatisierten Erzeugung von druckbaren Dateien aus Daten einer Datenbank, das ein Drucksystem bestehend aus wenigstens einer Druckverarbeitungskomponente umfasst, wobei die Druckverarbeitungskomponente Mittel zum Ausdrucken und/oder Weiterverarbeiten der Dateien aufweist.

Die Erfindung betrifft ferner ein Verfahren zur automatisierten Erzeugung von druckbaren Dateien aus Daten einer Datenbank, bei dem die Dateien von einem Drucksystem bestehend aus wenigstens einer Druckverarbeitungskomponente und einem Druckauftragerzeugungsmittel erzeugt, ausgedruckt und/oder weiterverarbeitet werden.

Die Erzeugung von druckbaren Dateien gewinnt zunehmend an Bedeutung, da auf den verschiedensten Anwendungsgebieten immer größere Mengen von Druckobjekten elektronisch erzeugt, weiterverarbeitet und ausgedruckt werden. Insbesondere besteht der Bedarf, individualisierte Postsendungen auf elektronischem Wege zu erzeugen und diese anschließend auszudrucken und weiter zu verarbeiten.

Beispielsweise bieten Postunternehmen über den reinen Brief- und Paketversand hinaus zahlreiche Dienstleistungen im Brief- und Mailingbereich an. Dabei wird innerhalb eines derartigen Systems der gesamte Erstellungsprozess für gedruckte und zu versendende Dokumente unterstützt. Mit der wachsenden Bedeutung der Elektronischen Post gilt dies auch im Bereich der E-Mail Kommunikation und der Internet-basierten Logistik.

Dabei dienen Komponenten eines für derartige Abläufe konzipierten Systems verschiedenen Zwecken. Zum Einen dienen sie als Einlieferungsschnittstelle und Produktionssystem für letztendlich papierne, gedruckte Briefsendungen, die per Post an den Empfänger zugestellt werden. Zum Anderen bieten Systemkomponenten mit Schnittstellen eine direkte Übergabemöglichkeit für Nachrichten auf elektronischem Wege. Versand und Auslieferung können so per E-Mail und Web-Protokollen erfolgen.

Für den Anwender sind zur Nutzung dieser Angebote einige produktionstechnische Hürden zu überwinden. Dies geht vom Entwurf eines Mailings über die Beschaffung von Zielgruppenadressen bis zum eigentlichen Seriendruck inklusive Qualitätskontrolle. Selbst bei Zuhilfenahme spezialisierter Dienstleister wie Lettershops und Druckzentren erweist sich die Mailingerstellung immer noch als komplexer Prozess. Mehrfache Medienbrüche und heterogene Schnittstellen, beziehungsweise Denkweisen unterschiedlicher involvierter Zwischenstellen, machen den Prozess für kleine Sendungsanzahlen teuer und aufwendig. Für große Mailings ist er zeitintensiv und technisch komplex.

Zum Drucken und Weiterverarbeiten von Druckaufträgen innerhalb eines Drucksystems werden typischerweise verschiedene Druckverarbeitungskomponenten wie Drucker, Sortier- und Kuvertieranlagen oder sonstige Verarbeitungsgeräte verwendet. Dadurch ergeben sich vielfältige Möglichkeiten für Hardwarekombinationen und Arbeitsabläufe, die jeweils eine spezielle Druckaufbereitung erfordern.

Druckaufbereitungsverfahren für verschiedenste Anforderungen sind aus dem Stand der Technik bekannt. Die Deutsche Patentschrift DE 199 21 120 C2 beschreibt beispielsweise ein Verfahren und ein System zum signaturweisen Ausschießen von Druckdaten innerhalb eines POD(Print On Demand)-Systems. Dabei ist das Drucken und Falten von Druckbögen betroffen, bei denen die Druckbilder aufeinanderfolgender Seiten passergenau zueinander liegen.

Aus der Deutschen Patentschrift DE 100 17 785 C2 ist ferner ein Verfahren und ein System zur Verarbeitung eines Datenstroms bekannt, bei dem der Datenstrom zur Ausgabe auf einem Druckgerät aufbereitet wird. Dabei wird ein Druckdatenstrom, der in einem ersten Druckdatenformat vorliegt, in ein normiertes Datenformat umgesetzt, und der derartig umgesetzte Druckdatenstrom anhand vorgegebener Indizierungskriterien indiziert. Der indizierte Druckdatenstrom wird dann mittels Sortierparameter in einer Sortierreihenfolge sortiert und der sortierte Druckdatenstrom zur weiteren Verarbeitung, insbesondere zum Ausdruck, ausgegeben.

In der Praxis stellt sich oftmals das Problem, dass Druckaufträge an verschiedene Drucksysteme übergeben werden, wobei die Drucksysteme jeweils eine unterschiedliche Datenaufbereitung erfordern. Dies ist insbesondere der Fall, wenn beispielsweise ein Postunternehmen Daten für Druckaufträge von Benutzern eines dafür konzipierten Servicesystems entgegennimmt, diese in einer zentralen Datenbank speichert und die Ausführung der Druckaufträge eigenen Systemkomponenten oder Druckdienstleistern übergibt. Jeder Druckdienstleister verfügt typischerweise über ein für ihn spezifisches Drucksystem mit verschiedenen Soft- und Hardwarekomponenten. Um die Benutzeraufträge nach Annahme der Daten durch das Postunternehmen einheitlich aufzubereiten und als fertige Druckaufträge an das jeweilige Drucksystem der Dienstleister zu übermitteln, ist beim Postunternehmen die Kenntnis aller Spezifikationen der beauftragten Druckdienstleister erforderlich. Dies erfordert wiederum einen erheblichen Aufwand an Hard- und Software auf Seiten des Postunternehmens.

Die Deutsche Offenlegungsschrift DE 198 17 878 A1 offenbart dazu beispielsweise ein Verfahren und eine Vorrichtung zur Herstellung, Umhüllung und Kuvertierung von Drucksendungen. Dabei werden Druckdaten beim Auftraggeber eines Druckauftrags hergestellt und über ein Netz an eine Druckeinrichtung übertragen, in der die übertragenen Druckdaten ausgedruckt werden. Der Auftraggeber erstellt den Druckauftrag auf seinem Personal Computer, der mit einem oder mehreren Zentralrechnern verbunden ist. Die Zentralrechner sind mit Servern verbunden, die sich beispielsweise in verschiedenen Städten oder Ländern befinden können. Der Auftraggeber wählt einen Server mit freier Druckkapazität und übermittelt diesem den Druckauftrag. Dieser Druckauftrag läuft beim ausgewählten Server vollautomatisch ab, wobei der Server vorzugsweise einen weiteren Personal Computer und eine Druckeinrichtung aufweist. Der Druckauftrag wird auf dem Personal Computer gespeichert und die Druckeinrichtung mit verschiedenen Komponenten wie Papierrollen, Beleimungsmaschinen, Druck-, Schneide-, Umhüllungs- und Falteinheiten von diesem angesteuert.

Die Deutsche Offenlegungsschrift DE 101 23 488 A1 beschreibt ferner ein Drucksystem zum Drucken einer Vielzahl von Aufträgen in einem System mit einer Vielzahl von Bearbeitungsstationen. Jede der Bearbeitungsstationen wird verwendet, um die Dokumente in ein druckfertiges Dateiformat zu bringen und ein elektronisches Job Ticket zu erstellen, das globale Dokumenteneigenschaften enthält. Dabei übermittelt ein Kunde dem Drucksystem direkt in Papierform, auf einem Datenträger oder über das Internet einen Auftrag für zu druckende Objekte.

Die Deutsche Offenlegungsschrift DE 101 22 880 A1 offenbart ein Verfahren zur automatischen Erzeugung von Druckanweisungen. An einem Computer werden dazu von einem Bediener Anweisungen eingegeben, damit der Computer eine Vielzahl von erhaltenen Dokumenten in einen elektronischen Ordner stellt und die Dokumente in dem Ordner in der für das gedruckte Endprodukt gewünschte Reihenfolge anordnet. Die Übermittlung des Auftrags eines Kunden an das Drucksystem erfolgt hierbei ebenfalls direkt in Papierform, auf einem Datenträger oder über das Internet einen Auftrag für zu druckende Objekte.

Aus der internationalen Patentanmeldung WO 02/21293 ist ein System bekannt, wobei ein Server über das Internet Daten eines Benutzers empfängt und die in einer Datenbank zwischen speichert. Diese Benutzerdaten werden anschließend von der Datenbank abgerufen und in einem Masterdokument als Metadaten eingefügt. Diese Metadaten wurden bereits vor der Abspeicherung in der Datenbank entsprechend deren späteren Verarbeitung als einzufügenden Metadaten behandelt.

Aus der Internationalen Patentanmeldung WO 01/61466 A1 ist ferner ein System zur Erzeugung von Dokumenten bekannt, wobei das System als Internet-Service ausgebildet ist und es einem Kunden ermöglicht wird, standardisierte Vorlagen zur Erstellung von Dokumenten zu verwenden. Dabei können mehrere Kunden mit Browsern über eine Internetanwendung Formulare ausfüllen und die so erzeugten Aufträge werden in einer Datenbank in Verbindung mit einem Webserver gespeichert. Die Aufträge werden von verschiedenen Textverarbeitungsprogrammen abgearbeitet und die erzeugten Dokumente werden dem Kunden oder einem bestimmten Empfänger übermittelt. Falls die Kapazitäten des Webservers für die Auftragsabarbeitung nicht ausreichen, können über ein LAN-Netzwerk Ergänzungseinheiten zum Einsatz kommen. Dabei greifen die Ergänzungseinheiten über Standard-Ethernet-Komponenten auf eine Jobliste des Webservers zu und replizieren jeweils einen Teil des Webservers.

Der Erfindung liegt die Aufgabe zugrunde, ein System zu schaffen, das es einem Drucksystem ermöglicht, Daten aus einer Datenbank außerhalb des Bereiches des Drucksystems zu erhalten und aus diesen Daten in Abhängigkeit von den spezifischen Anforderungen des Drucksystems automatisiert druckbare Dateien zu generieren, wobei die Daten der Datenbank von Benutzern eines Servicesystems beispielsweise eines Postunternehmens stammen, die Druckaufträge für Mailings in Auftrag gegeben haben.

Aufgabe der Erfindung ist es ferner, ein Verfahren zur automatisierten Erzeugung von Druckaufträgen aus Daten einer Datenbank durch ein Drucksystem bereitzustellen, bei dem sich die Datenbank außerhalb des Bereiches des Drucksystems befindet, wobei die Daten der Datenbank von Benutzern eines Servicesystems beispielsweise eines Postunternehmens stammen, die Druckaufträge für Mailings in Auftrag gegeben haben.

Erfindungsgemäß wird diese Aufgabe durch ein System mit den Merkmalen des Hauptanspruchs 1 gelöst. Die Aufgabe wird ferner durch ein Verfahren mit den Merkmalen des Anspruchs 2 gelöst, wobei der Gegenstand der abhängigen Ansprüche 3-4 besonders vorteilhafte Ausführungsformen des erfindungsgemäßen Verfahrens darstellen.

Die Erfindung umfasst ein System zur automatisierten Erzeugung von druckbaren Dateien aus Daten einer Datenbank, das ein Drucksystem bestehend aus wenigstens einer Druckverarbeitungskomponente umfasst, wobei die Druckverarbeitungskomponente Mittel zum Ausdrucken und/oder Weiterverarbeiten der Dateien aufweist, und das System folgende Merkmale umfasst:
- das Drucksystem weist wenigstens ein Druckauftragerzeugungsmittel auf,
- das Druckauftragerzeugungsmittel ist über eine erste Schnittstelle mit einem Server verbindbar,
- der Server ist über eine zweite Schnittstelle mit einer Datenbank verbindbar.
- das Druckauftragerzeugungsmittel weist Mittel zum Anfordern und Empfangen von Daten aus der Datenbank auf, und
- das Druckauftragerzeugungsmittel weist Mittel zur Aufbereitung der Daten der Datenbank für die Anforderungen der Druckverarbeitungskomponente und Mittel zur Erzeugung von druckbaren Dateien auf.

Die Aufgabe wird ferner durch ein Verfahren zur automatisierten Erzeugung von druckbaren Dateien aus Daten einer Datenbank gelöst, bei dem die Dateien von einem Drucksystem bestehend aus wenigstens einer Druckverarbeitungskomponente und einem Druckauftragerzeugungsmittel erzeugt, ausgedruckt und/oder weiterverarbeitet werden, und das Verfahren folgende Schritte umfasst:
- Das Druckauftragerzeugungsmittel erzeugt eine erste Nachricht, die einen Aufruf einer bestimmten Methode mit Parametern an einem Server beinhaltet,
- Das Druckauftragerzeugungsmittel stellt über eine erste Schnittstelle eine Verbindung zu dem Server her,
- das Druckauftragerzeugungsmittel übermittelt dem Server die erste Nachricht über die erste Schnittstelle,
- der Server verarbeitet die erste Nachricht, indem er die bestimmte Methode mit den zugehörigen Parametern aufruft,
- der Server stellt über eine zweite Schnittstelle eine Verbindung zu der Datenbank her,
- der Server ruft über die zweite Schnittstelle Daten aus der Datenbank ab,
- der Server gibt das Ergebnis des Aufrufs der bestimmten Methode in Form einer zweiten Nachricht an das Druckauftragerzeugungsmittel zurück, und
- das Druckauftragerzeugungsmittel erzeugt aus dem Ergebnis des Aufrufs der bestimmten Methode wenigstens eine druckbare Datei.

Bei dem Drucksystem handelt es sich beispielsweise um ein System bei einem Druckdienstleister, das Drucker, Sortier- und Kuvertieranlagen und/oder weitere Verarbeitungsgeräte umfasst. Innerhalb eines solchen Drucksystems ist erfindungsgemäß ein Druckauftragerzeugungsmittel installiert, das mit einem Server verbindbar ist. Der Server wiederum ist mit einer Datenbank verbindbar, welche Daten für zu erstellende Drucke enthält. Die Datenbank befindet sich außerhalb des Drucksystems und umfasst typischerweise große Datenmengen. Diese Daten stammen beispielsweise von Benutzern eines Servicesystems eines Postunternehmens, die Druckaufträge für Mailings in Auftrag gegeben haben.

Bei dem erfindungsgemäßen Druckauftragerzeugungsmittel handelt es sich typischerweise um ein Programm, das vorzugsweise auf Computern des Drucksystems installiert ist. Der Begriff "Computer" ist dabei in keiner Weise einschränkend zu verstehen. Es kann sich hierbei um eine beliebige, zur Durchführung von Berechnungen geeignete Einheit handeln, beispielsweise eine Workstation, einen Personalcomputer, einen Mikrocumputer oder eine zur Durchführung von Berechnungen und/oder Vergleichen geeignete Schaltung.

In einem besonders bevorzugten Ausführungsbeispiel der Erfindung ist das Druckauftragerzeugungsmittel in Form einer ersten Schnittstelle über eine SOAP-Schnittstelle mit einem SOAP-Server verbindbar. Die Abkürzung SOAP steht für Simple Object Access Protocol. SOAP ist ein Kommunikationsprotokoll zum Zugang zu einzelnen Programmmodulen im Internet. SOAP ist ein schlankes Protokoll, mit dem proprietäre Module verpackt und mit allgemein verständlichen Schnittstellen versehen werden können. SOAP legt fest, wie ein Funktionsaufruf mit XML-Daten über Rechnerplattformen (Remote Procedure Call) hinweg erfolgt. Vorteilhaft ist eine Verbindung zu dem Server über das Internet, es sind jedoch auch andere Verbindungen möglich. Dabei kann es sich um temporäre oder feste Verbindungen handeln.

Der Server ist erfindungsgemäß über eine zweite Schnittstelle mit wenigstens einer Datenbank verbindbar. In einem besonders bevorzugten Ausführungsbeispiel der Erfindung wird zur Verbindung zwischen Server und Datenbank ein PL/SQL-Layer eingesetzt. Die Abkürzung PL/SQL steht für Procedural Language/Structured Query Language. Dabei handelt es sich um eine proprietäre Programmiersprache beispielsweise für Oracle, die dem nicht-prozedualen SQL prozeduale Konstrukte und Steuerungsmöglichkeiten hinzufügt. Über den Server werden dem Druckauftragerzeugungsmittel so Daten aus der Datenbank übermittelt, die beispielsweise Vorlagen, variable Daten, Personalisierungsanweisungen und weitere Informationen über zu erstellende Druckaufträge enthalten.

Das Druckauftragerzeugungsmittel erstellt aus den erhaltenen Daten Druckaufträge, und generiert daraus automatisiert druckbare Dateien. Das Druckauftragerzeugungsmittel beschreibt dabei, wie die Dateien für eine bestimmte Papier/Hardware-Kombination aufzubereiten sind. Dies umfasst beispielsweise Informationsseiten für das Personal, Steuerzeichen für eine Kuvertieranlage, Schnittmarken, Papierformate, das Erzeugen von RIP-Tickets für Drucker, SDL-Steuerzeichen, Konvertierungsanweisungen und Anweisungen, wie die Daten zu einem Drucker transportiert werden.

Die Daten in der Datenbank stellen Aufträge von Benutzern über das Drucken von Postsendungen dar. Aufträge von Benutzern werden im Folgenden als UserJobs bezeichnet, während daraus resultierende Druckaufträge als PrintJobs bezeichnet werden. Da die von Benutzern erzeugten UserJobs sehr unterschiedlicher Größe sein können, und die PrintJobs für eine optimale Produktion zweckmäßigerweise weder zu klein noch zu groß sein sollten, hat es sich als vorteilhaft erwiesen, große Aufträge zu teilen, und/oder mehrere kleine Aufträge zu größeren zusammen zu fassen. Besonders bevorzugt ist dazu die Implementation eines Mechanismus, der große Aufträge automatisch teilt.

Weitere Vorzüge, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt
- Fig. 1: den schematischen Aufbau eines Systems zur automatisierten Erzeugung von druckbaren Dateien;
- Fig. 2: eine methodische Darstellung eines Aufrufes an einem SOAP-Server;
- Fig. 3: eine methodische Darstellung eines Aufrufes an einem SOAP-Server per SOAP;
- Fig. 4: eine detaillierte Darstellung eines Aufrufes an einem SOAP-Server über eine Apache SOAP API;
- Fig. 5: die Darstellung einer Server-Proxy-Klasse

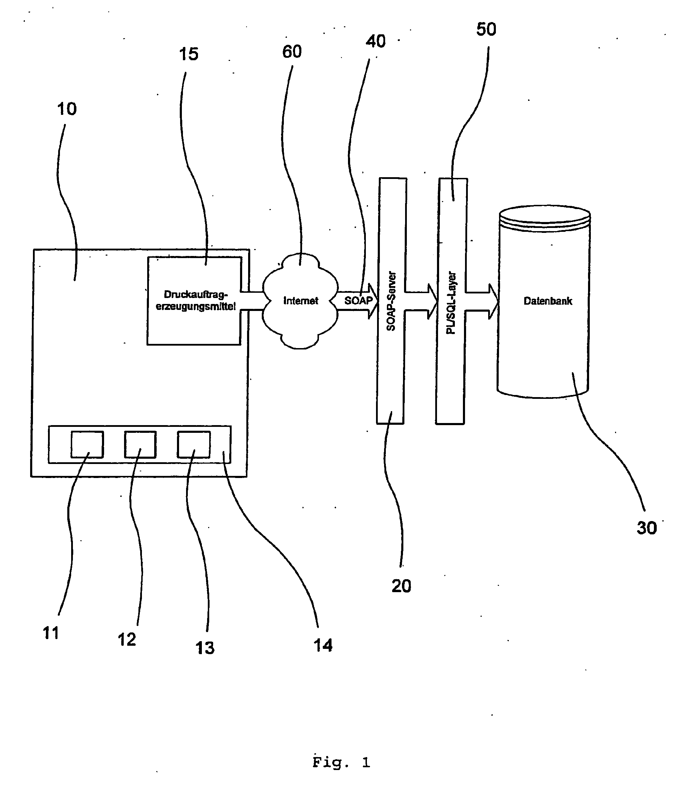

In Fig. 1 ist der Aufbau des Systems zur automatisierten Erzeugung von druckbaren Dateien anhand eines besonders bevorzugten Ausführungsbeispiels schematisch dargestellt. Ein Drucksystem 10 weist erfindungsgemäß ein Druckauftragerzeugungsmittel 15 auf. Das Drucksystem befindet sich beispielsweise bei einem Druckdienstleister, der Teil eines Mailingsystems ist, wobei das Mailingsystem elektronische Daten von Benutzern annimmt, aufbereitet und beispielsweise zu Briefen, Postkarten und/oder E-Mails weiterverarbeitet. Die Daten von Benutzern und zugehörigen Aufträgen sind zweckmäßigerweise in einer Datenbank 30 hinterlegt, die sich außerhalb des Bereiches des Drucksystems befindet.

Druckdienstleister weisen typischerweise unterschiedliche Drucksysteme mit spezifischen Anforderungen für verschiedene Druckverarbeitungskomponenten 14 auf, wobei die Druckverarbeitungskomponenten beispielsweise Drucker 11, Sortieranlagen 12 und/oder Kuvertieranlagen 13 umfassen können. Daher wird zur spezifischen Aufbereitung von Daten im Bereich des Drucksystems 10 erfindungsgemäß ein Druckauftragerzeugungsmittel 15 eingesetzt. Bei dem Druckauftragerzeugungsmittel 15 handelt es sich typischerweise um ein Programm, das vorzugsweise auf einem oder mehreren Computern des Drucksystems 10 installiert ist.

Um dem Druckauftragerzeugungsmittel 15 und damit dem Drucksystem 10 Zugriff auf die Inhalte einer Datenbank 30 außerhalb des Bereiches des Drucksystems zu ermöglichen, und um diese Schritte zu automatisieren, wurde in einem besonders bevorzugten Ausführungsbeispiel der Erfindung eine Client-Server-Architektur gewählt, bei der SOAP als Kommunikations-Medium über das Internet eingesetzt wird. Das Druckauftragerzeugungsmittel 15 ist dazu über eine erste SOAP-Schnittstelle 40 mit einem SOAP-Server 20 außerhalb des Bereiches des Drucksystems verbunden. Diese erste Schnittstelle wird vorzugsweise über das Internet 60 hergestellt. Es können jedoch auch andere Verbindungsarten gewählt werden, bei denen es sich um temporäre oder feste Verbindungen handeln kann.

Eine SOAP-Schnittstelle weist gegenüber proprietären Kommunikationsprotokollen wie CORBA (common object request broker architecture) oder RMI (remote methode invocation) beispielsweise den Vorteil auf, dass bei der Datenübertragung keine Konflikte mit einer Firewall des Druckauftragerzeugungsmittels 15 und/oder des Drucksystems 10 auftreten. SOAP setzt dabei als Datenübertragungs-Protokoll vorzugsweise HTTP/HTTPS ein. HTTP/HTTPS ist in einem Großteil der Firewalls zugelassen oder über Proxys getunnelt, so dass eine Anpassung der Firewalls nicht notwendig ist, und keine neuen Angriffspunkte geschaffen werden. Durch die Verwendung eines SOAP-Protokolls, das als grundlegendes Transport-Protokoll das HTTP-Protokoll einsetzt, ist ferner eine einfache Übermittlung über das Internet möglich.

Über die SOAP-Schnittstelle 40 werden alle Methoden bereitgestellt, welche das Druckauftragerzeugungsmittel 15 zum Erhalt aller erforderlichen Informationen für einen Druckauftrag aus der Datenbank 30 benötigt. Zweckmäßigerweise wird das System gegen Fremdzugriffe gesichert. Die Sicherung kann auf verschiedene Weisen erfolgen. Beispielsweise kann eine Authentifizierung des Druckauftragerzeugungsmittels 15 am Server 20 verwendet werden. Vorteilhaft ist ferner die Verwendung von HTTPS (HTTP Secure) als Übertragungsprotokoll.

Zugriffe des SOAP-Servers 20 auf die Datenbank 30 werden in einem besonders bevorzugten Ausführungsbeispiel der Erfindung über ein PL/SQL-Layer 50 ausgeführt. Dadurch ist es unter anderem möglich, alle Datenbank-Zugriffe zu protokollieren oder bestimmte Attribute zu setzen. Dies hat den Vorteil, dass eine Konsistenz der Datenbank sichergestellt werden kann.

Es hat sich als zweckmäßig erwiesen, alle Statusänderungen ohne Verbindung mit dem Internet am Druckauftragerzeugungsmittel vorzunehmen, und erfolgte Änderungen daraufhin an den Server zu senden. Dies hat den Vorteil, dass das Druckauftragerzeugungsmittel lediglich über eine temporäre Verbindung mit dem Internet verfügen muss, und auch ohne dauerhafte Internetverbindung arbeiten kann. Lediglich für den Abgleich mit dem Server muss eine Internetverbindung aufgebaut werden.

Ein Vorteil des erfindungsgemäßen Systems ist ferner, dass Updates für die Konfiguration des Druckauftragserzeugungsmittels zentral auf dem Server hinterlegt werden können. In einem besonders bevorzugten Ausführungsbeispiel der Erfindung überprüft das Druckauftragserzeugungsmittel beim Start, ob Updates vorliegen und aktualisiert seine Konfiguration automatisch via JavaWebStart von dem zentralen Server.

Besonders vorteilhaft ist es ferner, die eigentliche Kommunikation über SOAP von einer Apache SOAP API abzuwickeln. Die Abkürzung API steht für Application Programming Interface, bei dem es sich um eine von einem Betriebssystem oder einem Anwendungsprogramm vorgegebene Schnittstelle handelt, über die anderen Anwendungen standardisierte Software-Tools zur Verfügung gestellt werden. Eine API ermöglicht also einem Anwendungsprogramm, Funktion und/oder Dienste einer anderen Software zu benutzen. Im Gegensatz zu einer Dateischnittstelle ist eine API eine sogenannte Call-Schnittstelle. Die Vorteile bei der Benutzung einer API liegen beispielsweise in der Senkung von Programmieraufwand und einer einheitlichen Benutzeroberfläche und Funktionsweise.

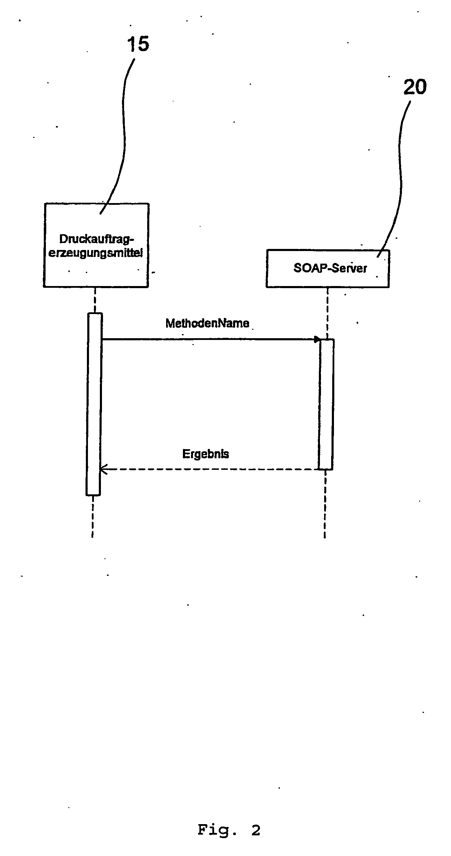

In Fig. 2 ist ein Ausführungsbeispiel eines methodischen Ablaufs dargestellt, bei dem das Druckauftragerzeugungsmittel 15 eine Methode am Server 20 aufruft und nach erfolgreicher Ausführung der Methode ein Ergebnis als Rückgabewert bekommt.

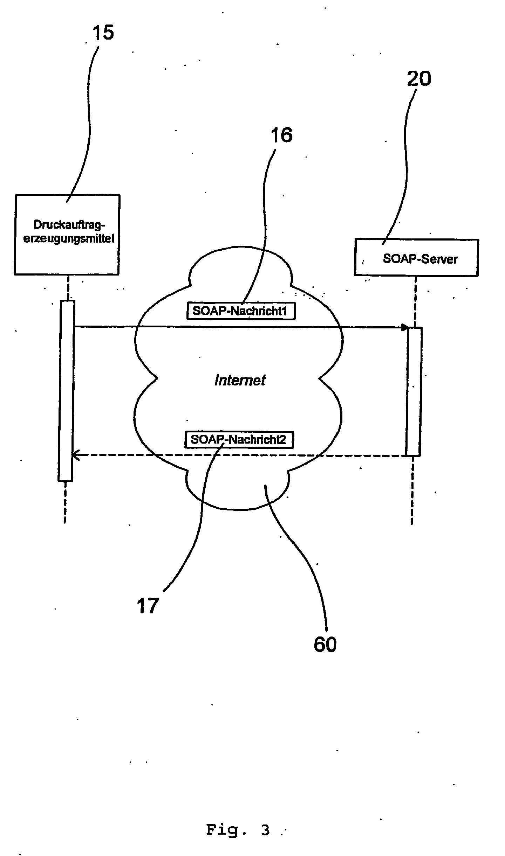

Methodenaufrufe per SOAP stellen sich als XML-Nachrichten dar, die über HTTP versendet werden. Fig. 3 zeigt den schematischen Ablauf eines derartigen Aufrufes. Das Druckauftragerzeugungsmittel 15 erzeugt eine erste *SOAP-Nachricht* 16, in der angegeben wird, welche Methode mit welchen Parametern aufgerufen werden soll. Diese SOAP-Nachricht wird dann mit Hilfe des HTTP-Protokolls über das Internet 60 an den SOAP-Server 20 übertragen. Dieser wertet die Informationen und Daten aus und gibt dann als zweite *SOAP-Nachricht* 17 ein Ergebnis zurück.

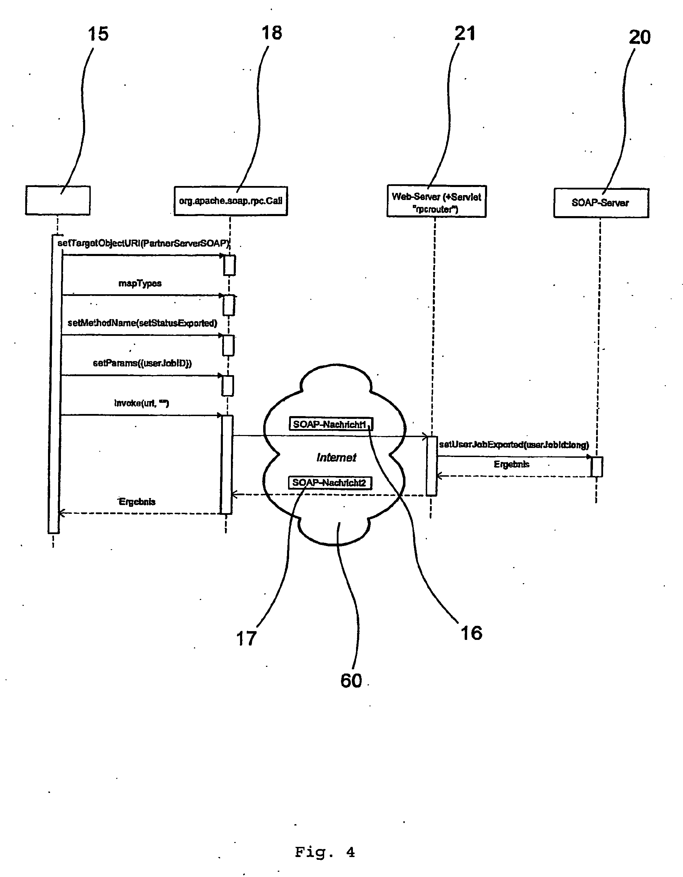

Im Detail stellt sich der SOAP-Aufruf mit Hilfe der Apache SOAP-API beispielhaft wie in Fig. 4 dar. Das Druckauftragerzeugungsmittel erzeugt eine Instanz der Call-Klasse der Apache SOAP-API und setzt zunächst bestimmte Eigenschaften dieses Objektes. In Fig. 3 sind beispielhaft verschiedene Methoden dargestellt, die von dem Druckauftragerzeugungsmittel 15 aufgerufen werden.

Eine Methode *TargetObject-URI* entspricht beispielswesie einer eindeutigen URI, die auf der Serverseite im RPC-Router einem bestimmten Objekt zugeordnet ist (im Beispielfall dem SOAP-Server) .

Eine Methode *mapTypes* wird vorzugsweise mehrmals aufgerufen, um so eigene Klassen (beispielsweise UserJob, User) über das SOAP übertragen zu können.

Über eine Methode *setMethodName* kann der Methodenname festgelegt und über *setParams* eine Liste der Parameterwerte gesetzt werden.

Eine Methode *invoke* übernimmt dann den eigentlichen Aufruf per SOAP. Es wird eine erste Nachricht 16 erzeugt und diese per HTTP an den Server 20 gesendet.

Es hat sich als zweckmäßig erwiesen, dass auf Seiten des Servers 20 zunächst ein Web-Server 21 die Anfrage annimmt und diese auswertet. Bei dem Web-Server kann es sich beispielsweise um Tomcat handeln. Um einen erfolgreichen SOAP-Aufruf zu ermöglichen, muss einer gesendeten URL das rpcrouter-Servlet der Apache SOAP-API zugeordnet sein, dem das Server-SOAP-Objekt bekannt ist. Diesem Servlet wird der Aufruf übergeben. Die Abkürzung URL steht für Uniform Ressource Locator. Über eine URL sind alle Dokumente im Internet eindeutig addressierbar.

Das rpcrouter-Servlet analysiert daraufhin die SOAP-Nachricht, bestimmt die aufzurufende Klasse und instanziiert diese. Danach wird die gewünschte Methode mit den übergebenen Parametern aufgerufen. Der mögliche Rückgabewert wird dann wiederum in eine zweite SOAP-Nachricht 17 umgewandelt und diese als Antwort per HTTP zurückgeliefert. Das clientseitige Call-Objekt 18 analysiert diese Nachricht und gibt das entstandene Ergebnis an das Druckauftragerzeugungsmittel 15 zurück. Im Fehlerfall kann hier gegebenenfalls ein Failure-Objekt abgefragt werden.

Möchte ein Druckauftragerzeugungsmittel 15 eine Methode am SOAP-Server aufrufen, so kann es in einem weiteren besonders bevorzugten Ausführungsbeispiel der Erfindung, eine ServerProxy-Klasse verwenden. Ein Proxy-Server nimmt Anforderungen von einem Client entgegen und gibt sie, gegebenenfalls modifiziert, an das ursprüngliche Ziel zurück.

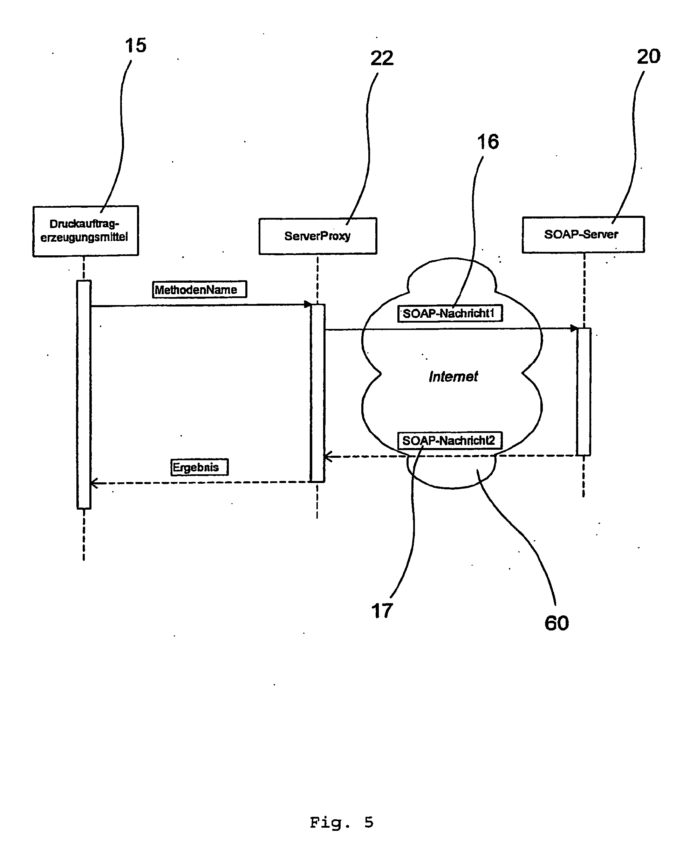

Ein derartiger Ablauf ist in Fig. 5 dargestellt. Der ServerProxy 22 kapselt die Apache SOAP API, und bietet dem Druckauftragerzeugungsmittel alle Methoden des Servers. Ein Aufruf einer solchen Methode wird dann über die Apache API weitergegeben und der Rückgabewert wiederum zurückgegeben.

Die SOAP-Antwortnachricht wird analysiert und
- im Fehlerfall eine Exception geworfen oder
- im Erfolgsfall das Ergebnis zurückgegeben.

Die jeweiligen Methoden wandeln dann primitive Datentypen, die als Objekte zurückgeliefert wurden, in den jeweiligen primitiven Datentyp und geben diesen dann zurück. Damit ist für das jeweilige Druckauftragerzeugungsmittel die SOAP-Kommunikation nicht transparent, sondern der ServerProxy 22 verhält sich (bis auf die längeren Laufzeiten der Methoden), als rufe er lokale Methoden auf.

Für die Kommunikation wird in einem besonders bevorzugten Ausführungsbeispiel der Erfindung das RPC (Remote Procedure Call) gewählt. RPC gewährleistet einen entfernten Funktionsaufruf. Jeder Server in einem Netz stellt im Rahmen dieses Konzeptes eine Anzahl von Diensten zur Verfügung, die mit RPC angefordert werden können. Diese Funktionen sind als Prozeduren eines Programmes realisiert und können unter Angabe von Serveradresse, Programmnummer und Prozedurnummer angesprochen werden. RPC bietet die Möglichkeit, auf einfache Weise Methodenaufrufe und deren Parameter zu übertragen. Das Übertragen ganzer XML-Bäume als Parameter oder Rückgabewert wird dadurch nicht spezifiziert. Im Fall des SOAP-Servers wird vorzugsweise eine Erweiterung der SOAP-Api von Apache verwendet, die festlegt, wie XML-Bäume über das SOAP RPC übertragen werden können. So können UserJobs als Methodenparameter über die Apache SOAP-Api übertragen werden.

Das SOAP RPC-Protokoll bietet ferner die Möglichkeit, einfache Datentypen wie String oder Integer zu übertragen. Aber auch komplexe Datentypen können in *Structs* oder *Arrays* übertragen werden, die wiederum aus einfachen Datentypen bestehen.

Bei der Kommunikation zwischen dem Druckauftragerzeugungsmittel 15 und dem Server 20 werden typischerweise verschiedene komplexe Datentypen übertragen (beispielsweise LogicalProduct, User, UserJob). Um diese im SOAP RPC-Protokoll übertragen zu können, werden zweckmäßigerweise Methoden implementiert, welche die Klassen als SOAP-Structs umsetzen und umgekehrt (Serialisieren/Deserialisieren). Von der Apache SOAP-Api wird dieser Schritt jedoch vereinfacht, indem sie eine Klasse bereitstellt, die diese Funktionalität für alle Klassen, die einer JavaBeans-Spezifikation genügen, bietet. Deshalb werden die drei Datenklassen zweckmäßigerweise anhand der JavaBeans-Spezifikation implementiert und können somit auf einfache Weise über die SOAP-API übertragen werden. Bei JavaBeans handelt es sich um ein portables, Plattform-unabhängiges Componentmodel, das in Java geschrieben ist.

Im Folgenden wird beispielhaft ein besonders bevorzugtes Ausführungsbeispiel eines Druckauftragerzeugungsmittels, das in einem Drucksystem installiert ist, dargestellt. Besonders vorteilhaft ist die Ausführung des Druckauftragerzeugungsmittels in Form einer XML-Konfiguration Mit einer derartigen Konfiguration kann der gesamte Produktionsablauf beim Drucken gesteuert werden. Die Bedienung erfolgt zweckmäßigerweise über eine grafische Benutzeroberfläche, über die beispielsweise Aktionen angestoßen und Parameter eingegeben werden. Die druckbaren Dateien können automatisiert zu einem Produktionsdrucker übermittelt werden.

Mittels des Druckauftragerzeugungsmittels kann ein Drucksystem beispielsweise ihm zugewiesene Aufträge aus einem Mailingsystem auf eigene lokale Systeme transferieren, sowie den Bearbeitungsstatus an das Mailingsystem zurückmelden. Das Druckauftragerzeugungsmittel nimmt als lokale Applikation zugleich die zentrale Funktion der Druckdatenaufbereitung wahr. Die Druckdatenaufbereitung kann beispielsweise folgende Funktionen umfassen:
- Aufbereitung von Auftragsdaten im XML-Format zu durchsatz-optimierten Druckmaschinen- und Finishingspezifischen Druckjobs.
- Zusammenfassung einzelner Druckjobs.
- Umwandlung von Druckjobs in andere Formate, sofern eine Druckmaschine dieses Format benötigt.
- Druckjobs mit maschinenspezifischen Steuerzeichen zur automatisierten Verarbeitung versehen. Dabei kann es sich beispielsweise um Barcodes handeln.
- Generierung von Reprints, um bei Produktionsfehlern die Nachbearbeitung einzelner Sendungen zu ermöglichen.

Die Konfiguration des Druckauftragerzeugungsmittels besteht zweckmäßigerweise aus Modulen, virtuellen Druckern und Settings.

In den Settings werden allgemeine Einstellungen wie z.B. Pfade und Kommunikationsparameter konfiguriert. Die Parameter können über eine Benuzeroberfläche des Druckauftragerzeugungsmittels verändert werden. In der folgenden Tabelle ist beispielhaft die Bedeutung/Funktion einiger möglicher Setting-Parameter aufgelistet:

| Parameter | Funktion |
|---|---|
| http.proxy | "true" oder "false" bestimmt, ob die Internet-Verbindung über einen Proxy erfolgt. |
| http.proxy.host | Proxy Host-Name |
| http.proxy.port | Zu benutzener Port für die Kommunikation mit dem Proxy |
| http.proxy.loginbox | "true" oder "false" bestimmt, ob die Benutzeroberfläche eine Loginbox bei der Anmeldung am Partner-Server anzeigt, in der man Username und Password für den Proxy angeben kann. |
| http.proxy.user | Username für Proxy-Anmeldung |
| http.proxy.passwd | Passwort für Proxy-Anmeldung |
| soap.protocol | Das zu verwendene Protokoll für die SOAP-Kommunikation. Beispielsweise werden "http" und "https" unterstützt |
| soap.host | Host-Name des SOAP-Partner-Servers |
| soap.port | Der zu verwendene Port für die SOAP-Kommunikation. |
| soap.path | Der Pfad auf dem SOAP-Partner-Server |
| soap.serviceid | Die ServicelD auf dem SOAP-Partner-Server |
| http.auth | "true" oder "false", bestimmt ob |
| http.auth.user | Username für HTTP Authentifizierung |
| http.auth.passwd | Username für HTTP Authentifizierung |
| site | Name der Produktions-Site |
| instanceid | InstanceID der verwendeten lnstance. Dient zur Benutzung mehrerer Rechner an einer Site |
| basepath | Basis-Verzeichnis |
| outputpath | Ausgangsverzeichnis für die erstellten Dateien |
| temppath | Verzeichnis, in dem temporäre Dateien angelegt werden |
| queuemanagerpat h | Verzeichnis, in dem ein Queue Manager seine Dateien ablegt |
| errorpath | Verzeichnis, in dem die error log Dateien abgelegt werden |
| partnerid | Partner ID des Druckdienstleisters |
| Partnername | Name des Druckdienstleisters |
| partnerstreet | Strasse des Druckdienstleisters |
| partnerpc | Postleitzahl des Druckdienstleisters |
| partnertown | Stadt des Druckdienstleisters |
| wamingdays | Anzahl der Tage, nachdem ein UserJob an dessen Status sich nichts geändert hat, in der Benutzeroberfläche beispielsweise gelb werden soll |
| compatibility | Muss auf "false" stehen |
| archivesample | Anzahl von Adressen, ab der für einen UserJob Belegexemplare produziert werden sollen |
| pdflibserial | Seriennummer für die PDF-Lib |

Zur Erstellung von druckfähigen Dateien aus einem PrintJob XML-File hat es sich als zweckmäßig erwiesen, einen PDF-Kernel vorzusehen. Auf welche Weise die druckfähigen Dateien produziert werden, ist durch eine Konfigurationssprache beschrieben. Dem Kernel wird von der Oberfläche nur eine PrintJob XML-Datei und ein zu benutzender virtuelle Drucker mitgeteilt.

Die Druckauftragskomponente bekommt zur Erzeugung von Druckdaten Auftragsdaten, die beispielsweise aus einem Template im PDF-Format und variablen Daten für die Personalisierung und Metainformationen im XML-Format bestehen. Mithilfe einer externen PDF-Library, die sich beispielsweise in der Datenbank 30 befinden kann, erzeugt das Druckauftragserzeugungsmittel schließlich fertige PDF-Dateien. Die Art der Erzeugung hängt von den Auftragsdaten und von hardwareunabhängigen Metainformationen, wie zum Beispiel Größe der Druckjobs, Sortierung nach postalischen Kriterien, Begleitscheinanweisungen für die Postauslieferung und/oder Beilagen ab. Sie erfolgt ferner in Abhängigkeit von hardwarespezifischen Metainformationen wie Ausschießen, Performance-Optimierung und/oder spezifischen Barcodes, die in den virtuellen Druckern konfiguriert sind.

Die Art der Erzeugung hängt außerdem davon ab, wie die Verarbeitung definiert ist. Das Druckauftragserzeugungsmittel ist daher auch ein Interpreter, der seine Logik aus einer Verarbeitungsdatei vorzugsweise im XML-Format bezieht. Soll ein Druckauftragserzeugungsmittel beispielsweise statt Postkarten aufklappbare Grusskarten mit einem einseitigen Anschreiben erstellen können, muss lediglich die Verarbeitungsdatei angepasst werden. Dies passiert an zentraler Stelle des Mailingsystems und beim nächsten Start wird die Änderung automatisch an das Druckauftragserzeugungsmittel übermittelt, so dass das Druckauftragserzeugungsmittel nun Grusskarten mit einseitigem Anschreiben erstellen kann.

Die Möglichkeiten, ein Dokument zu produzieren, sind sehr vielfältig und hängen von diversen Faktoren wie Ausgangsformat, gewünschten Farben, zu bedruckendem Papierformat, Endverarbeitung und verwendeten Druckern ab. Um zu beschreiben, wie ein Dokument für einen konkreten Fall zu produzieren ist, wird der Begriff "Virtueller Drucker" eingeführt. Ein virtueller Drucker beschreibt dabei, unter welchen Vorraussetzungen ein Dokument mit ihm produziert werden kann und wie das Dokument für diesen konkreten Fall aufbereitet wird.

Es ist möglich, dass verschiedene Dokumente mit dem gleichen virtuellen Drucker produzierbar sind, beispielsweise könnten sowohl Farb-, als auch Schwarz-Weiß-Dokumente bei gleicher Aufbereitung mit einem Farbdrucker erstellt werden. Es ist möglich, dass verschiedene virtuelle Drucker den gleichen physikalischen Drucker zum Druck benutzen, beispielsweise können Dokumente mit dem Ausgangsformat DIN A4 sowohl auf DIN A4 als auch auf DIN A3 mit anschließender Endverarbeitung gedruckt werden. Die beiden Fälle bedürfen unterschiedlicher Aufbereitung der Dateien und müssen deshalb mit unterschiedlichen virtuellen Druckern aufbereitet werden. Beide virtuelle Drucker können aber die Dateien zu dem gleichen physikalischen Drucker schicken, falls er DIN A3 und DIN A4 bedrucken kann.

Die virtuellen Drucker werden in der Konfiguration erstellt, und vom PDF-Kernel bei einer PrintJob Produktion schrittweise abgearbeitet.

Zu Beginn der Produktion wird dem Kernel der zu verwendende virtuelle Drucker mitgeteilt. Danach wird die PrintJob XML-Datei eingelesen, woraus die internen Datenstrukturen, die für die weitere Produktion notwendig sind, aufgebaut werden.

Während der gesamten Produktion merkt sich der Produktionskernel, welche Briefseite sich auf den erstellten Seiten der PDF-Dokumente befindet. Mit einer Funktion *CreateTemplatePDF* kann der statische Teil für die Produktion erstellt werden. Dazu müssen leere Seiten personalisiert werden. Werden diese personalisierten Seiten ausgeschossen, merkt sich der Kernel, wo die einzelnen Briefe positioniert werden. Die personalisierte PDF-Datei kann beliebig verändert werden. Dazu zählt beispielsweise das Hinzufügen von Seiten, die Änderung der Seitenreihenfolgen, das Hinzufügen von Texten und Linien und das Ausschießen. Lediglich ausgeschossene Dateien dürfen nicht erneut ausgeschossen werden. Wenn die personalisierte PDF-Datei (Variabler Teil) fertig verarbeitet ist, kann mit *CreateTemplatePDF* eine dazu passende statische PDF-Datei erstellt werden. Dabei wird aus den PDF-Vorlagen aller UserJobs eine FDP-Datei erstellt, in der alle notwendigen Kombinationen einmal vorkommen. Zur späteren Erstellung eines Job-Tickets für einen Produktionsdrucker wird eine Datenstruktur aufgebaut, die beschreibt, welche variable Seite zu welcher statischen Seite passt.

Attribute von *CreateTemplatePDF* sind beispielsweise folgende:

| **Attribute** | **Funktion** |
|---|---|
| PageWidth | Seitenbreite der zu erstellenden PDF-Vorlage. |
| PageHeight | Seitenhöhe der zu erstellenden PDF-Vorlage. |
| VariableFileName | Personalisierte PDF-Datei, für die eine statische Vorlage erstellt werden soll. |

Eine Funktion *Condition* kann als Attribut bei manchen Funktionen verwendet werden, damit diese unter bestimmten Bedingungen ausgeführt werden. Folgende Anweisungen werten *Condition* aus: "AddText", "AddLine" und "NewPDF". Durch die Angabe eines Schlüsselworts kann die Bedingung, bei der die Anweisung erfolgen soll, spezifiziert werden.

Folgende Schlüsselwörter können beispielsweise implementiert werden:

| **Schlüsselwort** | **Funktion** |
|---|---|
| doArchive | Wird nur ausgeführt, wenn Belegexemplare gedruckt werden sollen |
| internal_customer | Wird nur ausgeführt, wenn der Benutzer des UserJobs ein interner Benutzer ist. Liefert immer false. |
| external_customer | Wird nur ausgeführt, wenn der Benutzer des UserJobs ein externer Benutzer ist. Liefert immer true. |
| ContainsCurrentlnfoPostCriteria | Wird ausgeführt, wenn es Briefe für das gesetzte Infopost-Kriterium gibt. |
| ContainsCurrentlnfoPostCriterialnLoo p | Wird ausgeführt, wenn innerhalb einer Loop ein gesetztes Infopost-Kriterium vorhanden ist. |
| StartOfInfoLetter | Wird ausgeführt, wenn innerhalb der Loop der Start der Infobrief Briefe ist |
| SingleUserJob | Wird ausgeführt, wenn in diesem PrintJob nur ein UserJob enthalten ist |
| MultipleUserJobs | Wird ausgeführt, wenn in diesem PrintJob mehrere UserJobs enthalten sind |
| EndOfInfoLetter | Wird ausgeführt, wenn innerhalb der Loop das Ende der Infobrief Briefe ist |
| StartOflnfoPost | Wird ausgeführt, wenn innerhalb der Loop der Start der Infopost Briefe ist |
| EndOfInfoPost | Wird ausgeführt, wenn innerhalb der Loop das Ende der Infopost Briefe ist |
| StartOfStandard | Wird ausgeführt, wenn innerhalb der Loop der Start der Standard Briefe ist |
| EndOfStandard | Wird ausgeführt, wenn innerhalb der Loop das Ende der Standard Briefe ist |
| Containslnfoletter | Wird ausgeführt, wenn sich in dem PrintJob Infobrief Briefe befinden |
| ContainsInfopost | Wird ausgeführt, wenn sich in dem PrintJob Infopost Briefe befinden |
| ContainsStandard | Wird ausgeführt, wenn sich in dem PrintJob Standard Briefe befinden |

Innerhalb einer Funktion *SendToPrinter* kann ein Rip-Ticket erstellt, die PDF-Dateien gewandelt und die fertigen Dateien zu einem Drucker geschickt werden.

Mit einer Funktion *CreateRipTicket* wird konfiguriert, wie ein Rip-Ticket zu erstellen ist. Als Attribute muss Filename mit dem Zielnamen gesetzt werden. Innerhalb von *CreateRipTicket* werden mit *DataLines* zusammengefasst mehrere *Line-*Beschreibungen erstellt. Innerhalb von *Line* wird das Attribute *Data* gesetzt. Alle Texte von Line werden nacheinander ins Rip-Ticket-File geschrieben. Dabei werden angegebene Variablen ersetzt. An beliebigen Stellen können Repeat- und Loop-Schleifen eingebaut sein.

Bei einem UserJob mit der ID 10000105, bei dem sich acht variable PDF-Seiten bilden, entsteht z.B. folgende Rip-Ticket-Datei:

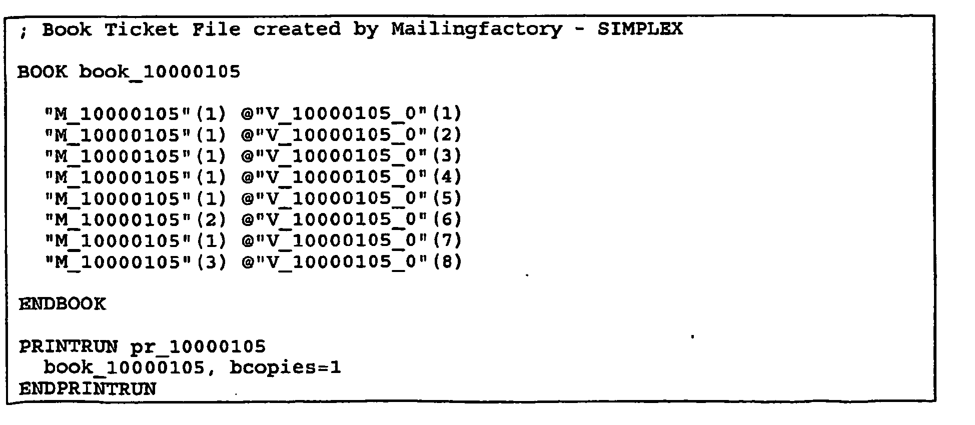

Mit einer Funktion Convert können die PDF-Dateien beispielsweise in ein Format wie Postscript konvergiert werden. Mögliche Attribute von Convert sind:

| Attribute | Funktion |
|---|---|
| Method | Die Konvertierungsmethode. |
| ProgramToUse | Name des Konvertierungsprogramms. |
| Printer | Der Drucker, der für die Konvertierung nach PostScript verwendet werden soll |
| DeletelnputFiles | Optional, true oder false. Bestimmt, ob die Eingangsdateien nach der Konvertierung gelöscht werden sollen. |

Mit einem Tag *NewPS* wird das Druckauftragerzeugungsmittel angewiesen, eine PDF-Datei beispielsweise nach PostScript zu konvertieren. Tags sind Begrenzerzeichen für Befehlsangaben in HTML. Ein Attribut von *NewPS* in *Convert* kann *InputFilename* sein:

| Attribute | Funktion |
|---|---|
| InputFilename | Der Name der Datei, die konvertiert werden soll |

Mit einer Funktion *Sendfile* können Dateien direkt zu einem Drucker geschickt werden. Attribute von *Sendfile* sind möglicherweise folgende:

| Attribute | Funktion |
|---|---|
| Command | Das Kommando, mit dem die Datei zum Drucker geschickt werden kann |
| Filename | Die Datei, die zum Drucker geschickt werden soll |
| Delete | Wenn dieses Attribut vorhanden ist, wird die Datei nach dem Versand automatisch gelöscht. |

In der Konfiguration des Druckauftragerzeugungsmittels können beliebig viele virtuelle Drucker angelegt werden. In einem virtuellen Drucker wird konfiguriert, welche Jobs mit diesem virtuellen Drucker bearbeitet werden können und wie die Dokumente erstellt werden sollen. Ein virtueller Drucker hat beispielsweise folgenden Aufbau:

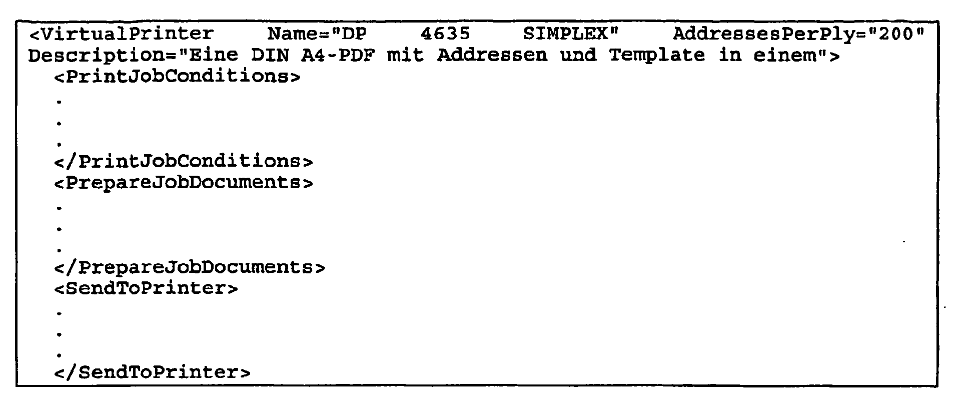

Die Attribute von *VirtualPrinter* können beispielsweise wie folgt aussehen:

| **Attribute** | **Funktion** |
|---|---|
| Name | Name des virtuellen Druckers. Dieser wird zweckmäßigerweise in der Benutzeroberfläche angezeigt und sollte Aufschluss über die Funktion geben |
| AddressesPerPly | Anzahl der Adressen, die bei der verdeckten Aufteilung der PrintJobs pro Schritt verarbeitet werden. |
| Description | Kann genutzt werden, um eine genauere Beschreibung für spätere Lesbarkeit zu hinterlegen. |

Über *PrintJobConditions* kann geregelt werden, welche Jobs mit diesem virtuellen Drucker produzierbar sind. Hier können Name-Value Paare angegeben werden, wobei der Name einem UserJob-Attribut entsprechen muss. Der Wert in Value gibt an, welchen Wert das Attribut haben muss, damit der UserJob mit diesem virtuellen Drucker produzierbar ist. Sobald eine Bedingung nicht zutrifft, ist der UserJob nicht mit diesem virtuellen Drucker produzierbar. UserJob-Attribute, die nicht unter den *PrintJobConditions* angegeben sind, können beliebig sein.

Innerhalb von *PrepareJobDocuments* können beliebig viele *PrepareDocumentSteps* angelegt werden. Diese Schritte werden nacheinander ausgeführt, um die Dokumente zu produzieren.

Innerhalb von *PrepareDocumentStep* wird beschrieben, wie ein PDF-Dokument erstellt wird. Dieses Dokument kann auch in weiteren Schritten als Vorlage verwendet werden. Innerhalb von *PrepareDocumetStep* können *Loop*, *Repeat* und *NewPDF* verwendet werden. Es kann auch ein Modul angegeben werden, dessen Inhalt wie folgt ausgeführt wird:

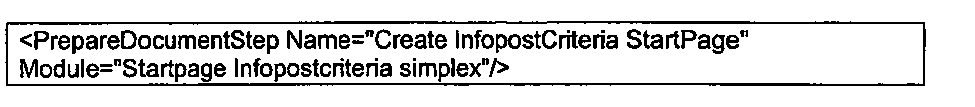

Auch auf der Ebene von *settings* und *VirtualPrinter* können Module angelegt werden. Diese können von mehreren *PrepareDocumentStep*-Einträgen in verschiedenen virtuellen Druckern referenziert werden.

Innerhalb einer *Loop*-Schleife werden alle darin enthaltenen Befehle wiederholt. Die Anzahl der Wiederholungen richtet sich nach der Einstellung von *AddressesPerPly* im virtuellen Drucker und nach der Anzahl der Adressen in dem PrintJob (NumberOfPieces). Die Schleife wird so oft wiederholt, wie *AddressesPerPly* in *NumberOfPieces* passt. Bei einem Rest wird zweckmäßigerweise aufgerundet.

*Loop* wird beispielsweise benutzt, um ein "verdecktes Jobsplitting" durchzuführen. Bei einem Loop-Durchlauf wird eine Variable *LoopNo* in jedem Schritt gesetzt. Diese Variable kann benutzt werden, um verschiedene Dokumentnamen zu erzeugen.

*Repeat* kann benutzt werden, um Anweisungen mehrfach durchzuführen. Die Anzahl der Wiederholungen kann parametrisiert werden. Während des Durchlaufs wird die Variable *RepeatNo* gesetzt. Die Attribute von *Repeat* lauten beispielsweise wie folgt:

| **Attribute** | **Funktion** |
|---|---|
| Start | Der Anfangswert von RepeatNo |
| Count | Die Anzahl der durchzuführenden Durchläufe |
| Action | Optional, kann benutzt werden um bei jedem Durchlauf Umgebungsvariablen abhängig von RepeatNo zu setzen. Unterstützt werden beispielsweise: |
| | "SetCompany" -> kann benutzt werden, wenn ein PrintJob aus mehreren UserJobs verschiedener Firmen stammt, um durch die Firmen zu iterieren. |
| | "SetinfoPosfCriteria" -> kann benutzt werden, um durch die verschiedenen Infopost-Kriterien zu iterieren |
| | "SetCompanyUserJob-> kann benutzt werden, um für durch die UserJobs der Company zu iterieren. |

Mit *NewPDF* kann ein neues PDF-Dokument erstellt werden. Innerhalb von NewPDF müssen Anweisungen erfolgen, wie das PDF-Dokument erstellt werden soll. Folgende Anweisungen sind beispielsweise innerhalb von NewPDF möglich: "Repeat", "Workflow", "PersonalizeOnTemplate", "Personalize", "CreateTemplatePDF" und "OpenPDF".

*NewPDF* kann folgende Attribute besitzen:

| Attribute | Funktion |
|---|---|
| Filename | Name der zu erstellenden PDF-Datei |
| Persistence | Gibt an, ob die zu erstellende Datei nur temporär existieren soll, oder nach Beendigung der Produktion erhalten bleiben soll. |
| | Werte: |
| | "Temp" -> Die Datei wird nach der Produktion gelöscht. |
| | "Final" -> Die Datei bleibt erhalten |
| Condition | Optional, |

Es hat sich als besonders vorteilhaft erwiesen, Workflows zu verwenden, in denen beschrieben wird, wie ein Dokument zu erstellen ist. Innerhalb von Workflows können beispielsweise *VariableData, Merge* und *Impositioning* erlaubt sein. *Workflow* besitzt zweckmäßigerweise keine Attribute. Sind mehrere Workflows nacheinander angelegt, so werden diese beispielsweise nacheinander abgearbeitet, wobei das Ergebnis eines Workflows immer als Quelle des nächsten Workflows dient.

Ein Befehl *PersonalizeOnTemplate* bewirkt, dass eine neue PDF-Datei entsteht, in der sich nacheinander mehrere Briefe befinden, die aus der PDF-Vorlage bestehen und mit den Datensätzen aus den variablen Daten personalisiert sind. Die Anzahl der Briefe richtet sich nach dem Attribut *AddressesPerPly.* Um für alle variable Daten Briefe zu generieren, muss *PersonalizeOnTemplate* innerhalb von Loop erscheinen. Dadurch entstehen mehrere PDF-Dateien mit jeweils einer Anzahl von *AddressesPerPly*-Briefen. Ist die Anzahl der Adressen nicht genau durch *AddressesPerPly* teilbar, befinden sich in der letzten PDF-Datei die restlichen Briefe. Befinden sich verschiedene UserJobs in dem PrintJob, wird automatisch die zu der jeweiligen Adresse passende PDF-Vorlage benutzt.

Zur Klassifizierung von Postsendungen werden üblicherweise Infopostkriterien festgelegt, die beispielsweise Infobrief, Infopost oder Standard umfassen können. Wird während der Personalisierung ein derartiges Infopost-Kriterium gesetzt, werden nur Adressen, die das entsprechende Infopost-Kriterium besitzen, behandelt.

Ein Beispiel dazu ist im Folgenden dargestellt:

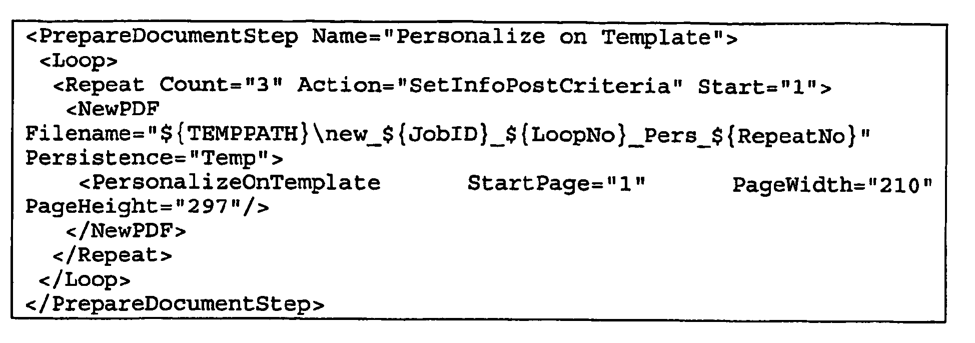

Durch die obigen Anweisungen entstehen mehrere PDF-Dateien im *Temppath* mit dem Namen *new_ID_x_Pers_y,* mit folgender Bedeutung:
- X:: Index zu Erkennung des Teilpaketes. Läuft von 0 bis "InitialNumberOfPieces"/"AddressesPerPly" (Aufgerundet).
- Y:: Das jeweilige Infopost-Kriterium. 1: Infobrief; 2: Infopost; 3: Standard.

Die Summe aller Briefe aus den verschiedenen Infopost-Kriterien bei einem Wert für X ist gleich *AddressePerPly* beziehungsweise dem Rest der Teilung.

Vorteilhaft ist ferner eine Funktion *Personalize*, die wie *PersonalizeOnTemplate* funktioniert, außer dass nicht auf der PDF-Vorlage, sondern auf einem neuen leeren Dokument personalisiert wird. Attribute von "Personalize" können beispielsweise wie folgt aussehen:

| **Attribute** | **Funktion** |
|---|---|
| PageWidth | Seiten-Breite der neu zu erstellenden PDF-Datei |
| PageHeight | Seiten-Höhe der neu zu erstellenden PDF-Datei |

Eine Funktion *OpenPDF* bewirkt, dass eine PDF-Datei geöffnet wird. Diese Datei dient bei weiteren Anweisungen als Quelle. Ein Attribut von *OpenPDF* ist beispielsweise *Filename*:

| Attribute | Funktion |
|---|---|
| Fliename | Der Dateiname komplett mit Pfad von der zu öffnenden Datei |

Vorteilhaft ist ferner, dass mit VariableData zusätzliche Daten auf ein PDF-Dokument aufgebracht werden können. Als Vorlage dient hierbei das gegenwärtige Dokument, welches entweder durch *OpenPDF* geöffnet wurde, aus dem vorherigen Workflow stammt, oder innerhalb des momentanen Workflows zuletzt entstand. Dazu muss ein Seitenbereich angegeben werden. Auf diesem Seitenbereich werden die innerhalb von *VariableData* angelegten Befehle ausgeführt. Innerhalb von VariableData ist "AddText", "AddSDL", "AddLine" und "AddOMR" möglich.

Attribute von *VariableData* sind beispielsweise:

| Attribute | Funktion |
|---|---|
| Name | Kann zu Bezeichnung verwendet werden |
| StartPage | Start-Seiten des Seitenbereichs, auf dem gearbeitet werden soll |
| EndPage | End-Seite des Seitenbereichs, auf dem gearbeitet werden soll |
| Step | Die Schrittweite für den Seitenbereich. Soll z. B. nur jede zweite Seite bearbeitet werden, so ist Step=2 |

Mit Funktionen wie *StartPage* und *EndPage* können auch mathematische Anweisungen erfolgen. Es können beispielsweise folgende Zeichen unterstützt werden:

| Zeichen | Funktion |
|---|---|
| () | Klammerung |
| * | Multiplizieren |
| / | Dividieren |
| + | Addieren |
| - | Subtrahieren |
| % | Modulo |
| first | Schlüsselwort für die erste Seite -> 1 |
| last | Schlüsselwort für die letzte Seite des Dokuments. |

Dabei führt *Endpage*="last/2+1" beispielsweise dazu, dass die Seiten bis zur mittleren geraden Seiten bearbeitet werden.

Innerhalb von *VariableData* kann eine Funktion *AddText* benutzt werden, um einen Text hinzuzufügen:

| Attribute | Funktion | | |
|---|---|---|---|
| Data | Text-String, der eingefügt werden soll | | |
| Rotation | Text Ausrichtung. Mögliche Werte beispielsweise 0,90,180,270 | | |
| Color | Farbe, mit der der Text dargestellt werden soll. Mögliche Werte: black, blue, red, green, cyan, magenta, yellow, white | | |
| FontSize | Die Font-Größe in pt | | |
| xPos | Textstartpunkt in horizontaler Richtung, gemessen vom linken Seitenrand. Einheit: mm | | |
| yPos | Textstartpunkt in vertikaler Richtung, gemessen vom unteren Seitenrand. Einheit: mm | | |
| Font | Der Font, mit dem der Text dargestellt werden soll. Z.B.: | | |
| | TimesRoman | Helvetica | Courier Symbol |
| | TimesBold | HelveticaBold | CourierBold |
| | Timesltalic | HelveticaOblique | CourierOblique |
| | TimesBoldltalic | HelveticaBoldOblique | CourierBoldOblique |
| | ZapfDingbats | | |
| ReplaceData | "TRUE" oder "FALSE". Bestimmt, ob der Text geparst werden soll, damit Variablen erkannt und durch ihre Werte ersetzt werden. | | |
| Condition | Optional, | | |
| CharSpacing | Optional, gibt an, wie viele Leerzeichen zwischen alle Zeichen innerhalb des Text-Strings eingefügt werden sollen | | |
| MaxLength | Optional, begrenzt den Text-String auf die angegebene Anzahl von Zeichen. | | |

Eine Funktion *AddLine* kann innerhalb von *VariableData* benutzt werden, um eine Linie zwischen zwei Punkte hinzuzufügen:

| Attribute | Funktion |
|---|---|
| xStart | Startpunkt der Linie in horizontaler Richtung, gemessen vom linken Seitenrand. Einheit: mm. |
| yStart | Startpunkt der Linie in vertikaler Richtung, gemessen vom unteren Seitenrand. Einheit: mm. |
| xEnd | Endpunkt der Linie in horizontaler Richtung, gemessen vom linken Seitenrand. Einheit: mm. |
| yEnd | Endpunkt der Linie in vertikaler Richtung, gemessen vom unteren Seitenrand. Einheit: mm. |
| Thickness | Dicke der Linie in mm. |
| Color | Farbe, mit der die Linie dargestellt werden soll. Mögliche Werte: block, blue, red, green, cyan, magenta, yellow, white |
| Condition | Optional |

Eine Funktion *AddOMR* kann innerhalb von *VariableData* benutzt werden, um auf Seiten OMR-Steuerzeichen hinzuzufügen:

| **Attribute** | **Funktion** |
|---|---|
| xPos | Startpunkt (oben/links) der Steuerzeichen in horizontaler Richtung, gemessen vom linken Seitenrand. Einheit: mm. |
| yPos | Startpunkt (oben/links) der Steuerzeichen in vertikaler Richtung, gemessen vom rechten Seitenrand. Einheit: mm. |
| Sequenz | Bestimmt die Zählweise der BS-Striche. Unterstützt werden: 0-7, 1-7, 7-1 und 7-0. Wird z. B. 0-7 verwendet, dann nehmen die BS-Striche nacheinander folgende Werte an: |
| | BS1 : 0 1 0 1 0 1 0 1 |
| | BS2 : 0 0 1 1 0 0 1 1 |
| | BS4 : 0 0 0 0 1 1 1 1 |
| LineWidth | Strichstärke der Steuerzeichen in mm. |
| Width | Strichlänge der Steuerzeichen in mm |

Dabei muss für jeden Steuerzeichen-Strich innerhalb von *AddOMR* ein "Line"-Tag hinzugefügt werden.

| Attribute | Funktion | |
|---|---|---|
| Name | Kann verwendet werden, um Strichfunktion zu beschreiben. | |
| Position | Die Position innerhalb der Striche. Die erste Position ist an der durch xPos und yPos bestimmten Stelle. Nachfolgende Positionen liegen jeweils 1/6 Zoll weiter Richtung unteren Rand. Die Positionen müssen durchgängig durchgezählt sein. | |
| Funktion | Beschreibt die Funktion der Linie. Folgende Funktionen können unterstützt werden: | |
| | ON: | Der Strich erscheint auf jeder Seite |
| | OFF: | Der Strich erscheint auf keiner Seite |
| | BS1: | Zum Zählen der Blatt-Sequenz |
| | BS2: | Zum Zählen der Blatt-Sequenz |
| | BS4: | Zum Zählen der Blatt-Sequenz |
| | EVEN: | Bildet eine gerade Parität |
| | ODD: | Bildet eine ungerade Parität |
| | LAST: | Wird bei der letzten Briefseite gesetzt |
| | NOTLAST: | Wird bei allen Seiten außer der letzten Briefseite gesetzt. |
| | DGR: | DGR-Funktion |
| | DZ: | DZ-Funktion |

Eine Funktion *EmptyPageInsert* fügt beispielsweise eine oder mehrere neue leere Seiten ein. Mögliche Attribute sehen wie folgt aus:

| Attribute | Funktion |
|---|---|
| PageWidth | Breite der neuen Seite |
| PageHeight | Höhe der neuen Seite |
| PageNo | Seitennummer des momentanen Dokuments wo die leere(n) Seite(n) eingefügt werden soll |
| Position | "After" oder "Before". Gibt an, ob die Seite(n) vor oder nach PageNo eingefügt werden sollen |
| NumberOfPages | Anzahle der leeren Seiten, die eingefügt werden sollen. |

Durch eine Funktion Merge können verschiedene PDF-Dateien zusammengeführt werden:

| Attribute | Funktion |
|---|---|
| Name | Kann benutzt werden, um ein Merging zu benennen. |
| StartPage | Gibt an, an welcher Stelle des momentanen Dokuments ein anderes Dokument hinzugefügt werden soll. |
| EndPage | Dieses Attribut ist wichtig, wenn abwechselnd vom momentanen Dokument und von anderen Dokumenten Seiten genommen werden. |
| Step | 0, wenn die neuen Dokument komplett in die angegebene Stelle eingefügt werden sollen, ansonsten werden mit dieser Schrittweite abwechselt Seite von dem aktuellen Dokument und dem hinzugefügten Dokumenten benutzt. |
| Position | "After" oder "Before". Gibt an, ob die Dokumente vor oder hinter der mit Startpage angegebenen Seite eingefügt werden sollen. |
| Overlay | "true" oder "false" |
| Description | Kann benutzt werden, um einen Merge-Vorgang genau zu beschreiben. |

Innerhalb von *Merge* werden zweckmäßigerweise die Dokumente mit *InsertPDF* angegeben, die einzufügen sind. Attribute von *InsertPDF* können beispielsweise folgende sein:

| Attribute | Funktion |
|---|---|
| NewStartPage | Start-Seite des Bereichs, der von diesem Dokument eingefügt werden soll. |
| NewEndPage | End-Seite des Bereichs, der von diesem Dokument eingefügt werden soll. |
| NewStep | Kann benutzt werden um jede x-ste Seite einzufügen. Z. B. NewStep="2" -> es wird jede zweite Seite aus dem Bereich eingefügt. |
| Filename | Name der Datei, die eingefügt werden soll |
| DeleteAfterlnsert | "TRUE" oder "FALSE", bestimmt, ob die Datei nach dem Einfügen gelöscht werden soll. |

Eine Funktion *Impositioning* ist zweckmäßig, um zu bestimmen, wie ein Dokument ausgeschossen werden soll. Innerhalb von *Impositioning* können beliebig viele Seiten beschrieben werden. In der Seitenbeschreibung wird festgelegt, welche Seiten aus dem Original-Dokument auf den neuen Seiten positioniert werden. Die Seitenbeschreibung wird vorzugsweise mehrmals durchlaufen, wobei jeweils die zu nehmende Original-Seite neu berechnet wird. Die Anzahl der Durchläufe richtet sich nach den Werten in *Signature, Increment* und nach der Anzahl der Originalseiten. Es wird vorzugsweise so oft durchlaufen, wie die Anzahl der Seiten in Signature**Increment* passt (Aufgerundet).

Mögliche Attribute für *Impositioning* sind folgende:

| **Attribute** | **Funktion** |
|---|---|
| PageWidth | Seiten-Breite für das neue Dokument |
| PageHeight | Seiten-Höhe für das neue Dokument |
| Increment | Schrittweite für den Seitenzähler |
| Signature | Bestimmt die Anzahl der Durchläufe. Wenn ein Einfachnutzen produziert werden soll, muss Signature der Anzahl der Original-Seiten auf einer neuen Seite sein. |

Attribute für *AddPage* sind dabei:

| **Attribute** | **Funktion** |
|---|---|
| StartPage | Die Original-Seite, die beim ersten Durchlauf positioniert wird |
| CountDirection | "positive" oder "negative", bestimmt ob der bei Increment angegebene Werte bei den Durchlaufen jeweils addiert oder subtrahiert wird. |
| xPos | Bestimmt, wo in horizontaler Richtung die Original-Seite auf der neuen Seite positioniert wird. Abstand in mm vom linken Seitenrand gemessen. |
| yPos | Bestimmt, wo in vertikaler Richtung die Original-Seite auf der neuen Seite positioniert wird. Abstand in mm vom unteren Seitenrand gemessen. |
| Rotation | "0", "90", "180" oder "270". Bestimmt die Ausrichtung der Original-Seite auf der neuen Seite. |
| xScale | Dient zur horizontalen Skalierung. Mit "1" bleibt die Originalgröße erhalten. bei "2" wird die Größe verdoppelt. |
| yScale | Dient zur vertikalen Skalierung. Mit "1" bleibt die Originalgröße erhalten. bei "2" wird die Größe verdoppelt. |

Innerhalb der Konfiguration des Druckauftragerzeugungsmittels kann auf verschiedene Variablen zugegriffen werden. Diese Variablen können verwendet werden, um einen Dokumentnamen und verschiedene Texte in neuen Dokumenten zu erstellen. Die Variablen werden je nach Funktion zu Beginn oder während der Produktion gesetzt.

Zur lokalen Datenhaltung innerhalb des erfindungsgemäßen Drucksystems 10 mit einem installierten Druckauftragerzeugungsmittel 15 ist ein QueueManager vorteilhaft. Er verwaltet für alle UserJobs und PrintJobs die notwendigen Informationen, wie z.B. Status, Dateien und/oder Attribute. Dazu verwendet der QueueManager vorzugsweise eine hierarchische Datenstruktur. Diese Datenstruktur legt er bei jeder Änderung auf einem Speichermedium wie einer Festplatte ab, damit nach einem Neustart des Systems alle Informationen noch vorhanden sind. Das Verzeichnis ist beispielsweise konfigurierbar über ein Attribut *QueueManagerPath* in einer Konfigurations-Datei (PSSConfiguration.xml). In dem Verzeichnis wird vom QueueManager jeweils ein Verzeichnis für UserJobs und PrintJobs angelegt, in denen die entsprechenden XNIL-Dateien abgelegt werden.

Im Folgenden ist ein Beispiel für QueueManager dargestellt. Der äußerste Container heißt immer *QueueManager*. In diesem befinden sich zwei Container: *PrintJobs* für alle PrintJobs und *UserJobs* für alle UserJobs.

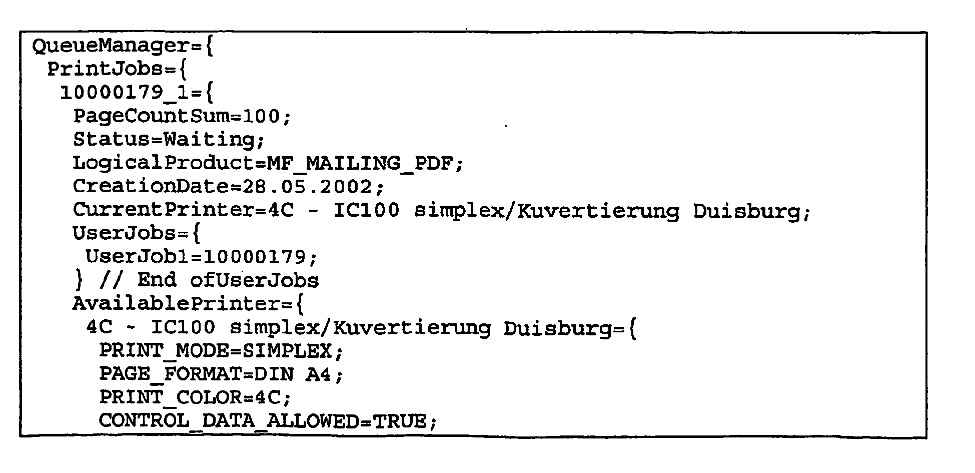

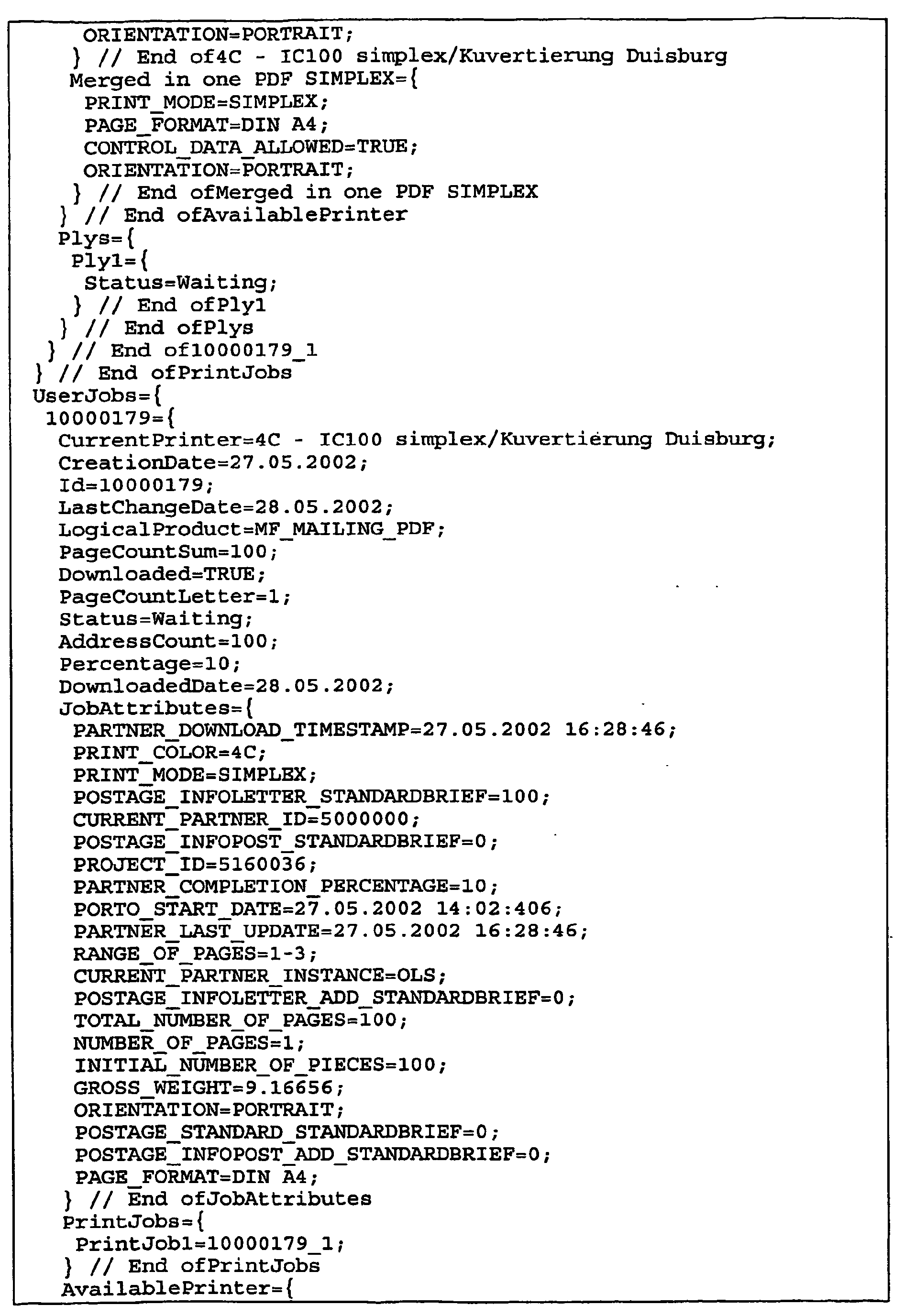

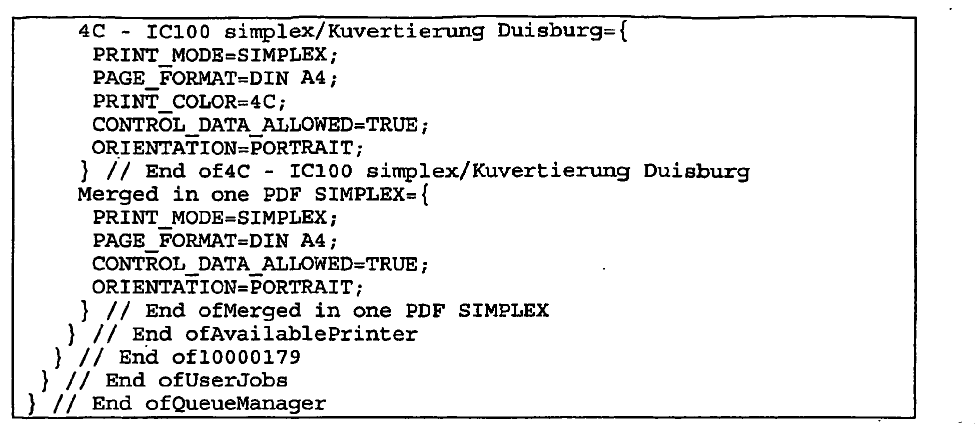

Eine beispielhafte Datenstruktur, die der QueueManager für einen UserJob anlegt, ist der folgenden Tabelle zu entnehmen:

| UserJobID | | | | |
|---|---|---|---|---|
| CurrentPrinter= | | | | |
| CreationDate= | | | | |
| Id= | | | | |
| LastChangeDate= | | | | |
| LogicalProduct= | | | | |
| PageCountSum= | | | | |
| Downloaded= | | | | |
| PageCountLetter= | | | | |
| Status= | | | | |
| AddressCount= | | | | |
| Percentage= | | | | |
| DownloadedDate= | | | | |
| JobAttributes | PrintJobs | AvailablePrinter | | |
| JobAttribute1= | PrintJob1= | Printer1 | ... | PrinterN |
| . | . | Attribute1= | . | Attribute1= |
| . (alle UserJob Attribute) | .(alle PrintJobs) | . | . | . |
| | . | . | . | . |
| . | PrintJobN= | AttributeN | . | AttributeN |
| JobAttributeN= | | = | | = |

Bei der Synchronisation mit dem SOAP-Server werden die Attribute von neuen UserJobs erfragt. Mit diesen Attributen legt der QueueManager einen neuen UserJob an. Dabei wird beispielsweise wie folgt vorgegangen:
- Erzeugen des neuen UserJob-Containers
- Attribut ID wird mit *UserJobID* gesetzt
- Attribut Status wird auf *READY_FOR_DOWNLOAD* gesetzt
- Attribut *Percentage* wird auf 0 gesetzt
- *LogicalProduct* wird auf den entsprechenden Wert gesetzt
- *Downloaded* wird auf FALSE gesetzt
- *LastChangeDate* wird auf die aktuelle Uhrzeit gesetzt
- Der Container *UserAttribute* wird hinzugefügt
- Ein leerer PrintJobs-Container wird hinzugefügt
- *AddressCount* wird aus den UserJob-Informationen gesetzt
- *CreationDate* wird aus den Job-Informationen gesetzt
- *PageCountLetter* wird aus den Job-Informationen gesetzt
- *PageCountSum* wird aus den Job-Informationen gesetzt
- Der Container *AvailablePrinter* wird hinzugefügt.

Mögliche virtuelle Drucker ergeben sich aus der Konfiguration in einer PSSConfiguration. Es werden alle Drucker eingefügt, deren *PrintJobConditions* keine Attribute des UserJobs ausschließen. Die *PrintJobConditions* werden für jeden Drucker in der Struktur gespeichert. Wird im weiteren Verlauf aus dem UserJob ein oder mehrere PrintJobs erzeugt, werden die entsprechenden *UserJobIDs* im Container PrintJobs eingetragen. Bei jeder Änderung, beispielsweise bei Statusänderungen, wird das Attribut *LastChangeDate* vom QueueManager neu gesetzt. Wird der UserJob heruntergeladen, so wird *DownloadedDate* gesetzt und die heruntergeladene XML-Datei im UserJob-Verzeichnis abgelegt.

Eine beispielhafte Datenstruktur, die der QueueManager für einen PrintJob anlegt, ist der folgenden Tabelle zu entnehmen:

| PrintJobID | | | | | | |
|---|---|---|---|---|---|---|
| PageCountSum= | | | | | | |
| Status= | | | | | | |
| LogicalProduct= | | | | | | |
| CreationDate= | | | | | | |
| CurrentPrinter= | | | | | | |
| StartAddress= | | | | | | |
| EndAddress= | | | | | | |
| UserJobs | AvailablePrinter | | | Plys | | |
| UserJob1= | Printer1 | ... | PrinterN | Ply1 | ... | PlyN |
| . | Attribute1= | . | Attribute1= | Status= | ... | Status= |
| . (UserJob in diesem PrintJob) | . | . | . | | | |
| | . | . | . | | | |
| . | AttributeN | . | AttributeN | | | |
| UserJobN= | = | | = | | | |

Wird aus einem oder mehreren UserJobs ein PrintJob angelegt, erstellt der QueueManager den entsprechenden PrintJob-Container. Dabei wird beispielsweise wie folgt vorgegangen:
- Aus den UserJob XML-Dateien wird eine oder mehrere PrintJob XML-Datei erstellt
- Der PrintJob-Container wird angelegt
- *Status* wird auf WAITING gesetzt
- *LogicalProduct* wird gesetzt, wobei der Wert durch den/die UserJob(s) vorgegeben wird
- Der UserJob-Container wird angelegt und alle UserJobs, aus denen dieser PrintJob besteht, werden eingetragen
- Der AvailablePrinter-Container wird vom UserJob kopiert und eingefügt
- Wenn aus einem UserJob mehrere PrintJobs erstellt werden sollen, werden *StartAddress* und *EndAddress* gesetzt (Der Adressbereich für diesen PrintJob)
- *PageCountSum* wird gesetzt (Anzahl aller Druckseiten in diesem PrintJob)
- *CurrentPrinter* wird auf den gewählten Drucker gesetzt
- Es wird ermittelt, auf wie viele Plys der PrintJob aufzuteilen ist (Ergibt sich aus zu druckenden Briefen und Attributen *AddressesPerPly* des Druckers in der Konfiguration)
- Der Plys-Container wird entsprechend erstellt und alle Plys auf WAITING gesetzt
- *CreationDate* wird auf die momentane Uhrzeit gesetzt.

Bei jeder weiteren Änderung des PrintJob-Status werden von den dazugehörigen UserJobs *LastChangeDate* und *Percentage* aktualisiert.

Beim Erzeugen eines PrintJobs wird aus den UserJob XML-Dateien eine neue PrintJob XML-Datei erstellt. Diese Funktion wird beispielsweise von einer Klasse RecreateXML übernommen. Die Datei UserJob-XML enthält beispielsweise UserJob-Attribute, Company-Daten, Item-Daten und UserJob-Files. Die UserJob Files sind in einem besonders bevorzugten Ausführungsbeispiel der Erfindung Base64-kodiert. Bei Base64 handelt es sich um eine Codierung, die durch das Programm MIMENCODE im MIME-Standard benutzt wird, um binäre Daten in ein ASCIT-Subset umzuwandeln.

Die Klasse *RecreateXML* fasst alle UserJobs in einem JOBTRANSFER-ENVELOPE zusammen. Die UserJob-Attribute, Company-Daten und Item-Daten von jedem UserJob werden unverändert übernommen. Die Dateien mit den Print-Instruktionen und den variablen Daten werden von RecreateXML verändert. Die restlichen Dateien werden übernommen.

Wird ein UserJob in mehrere PrintJobs aufgeteilt, werden die variablen Daten auf Sätze aufgeteilt. Jeder PrintJob erhält einen dieser Sätze.

Die Print-Instruktionen der UserJobs können beispielsweise in folgendem Format sein:

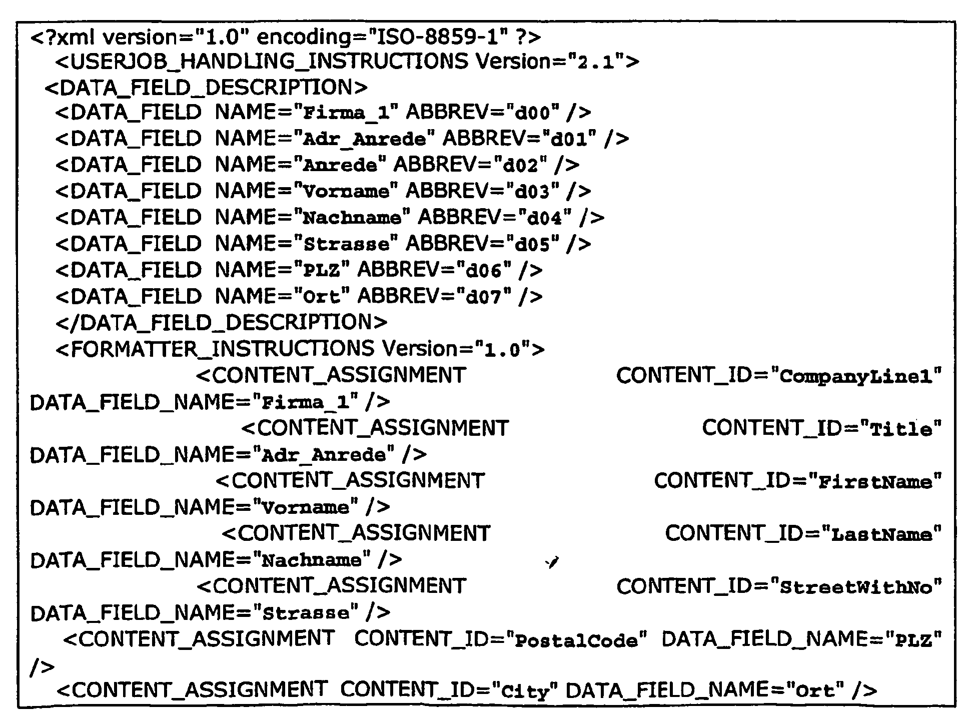

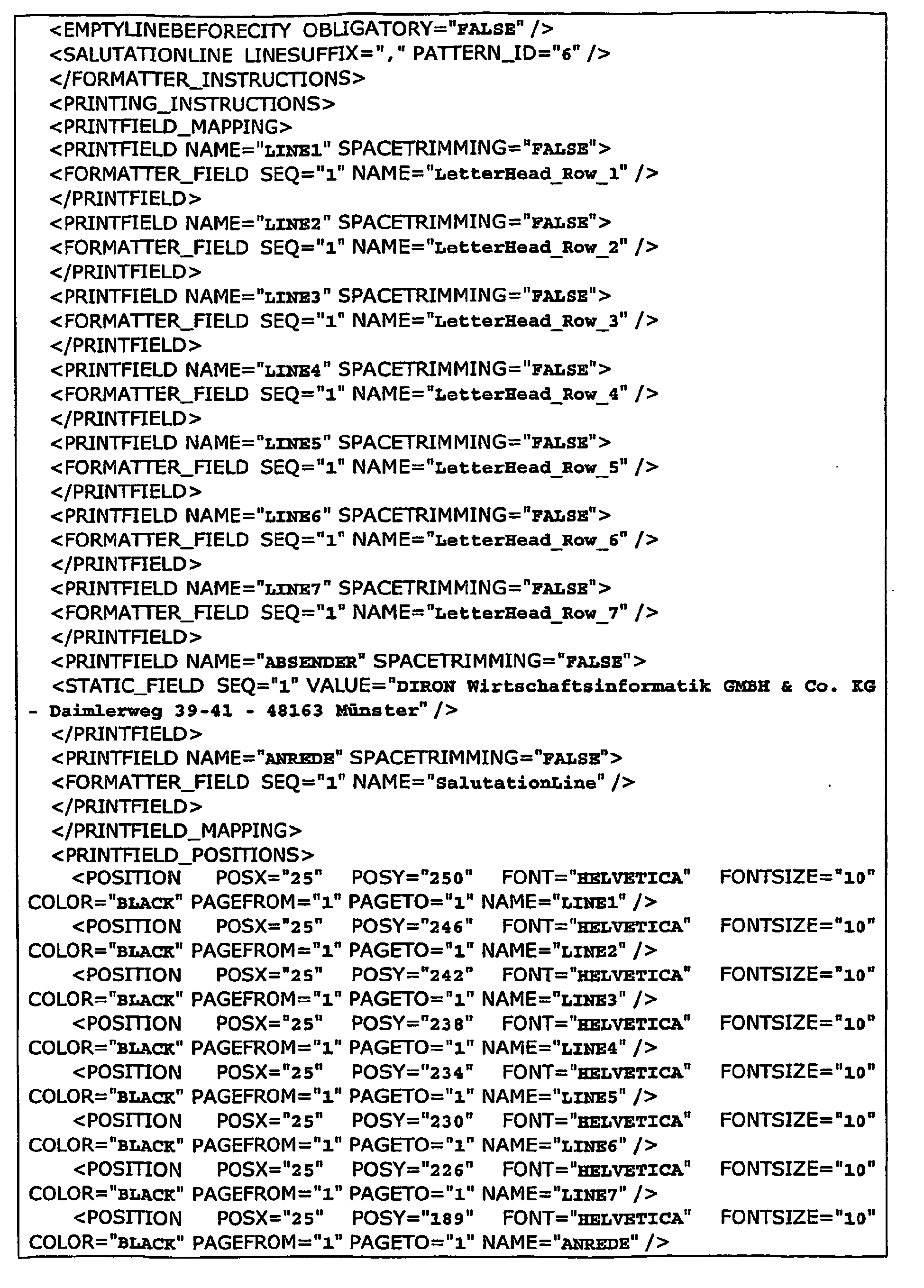

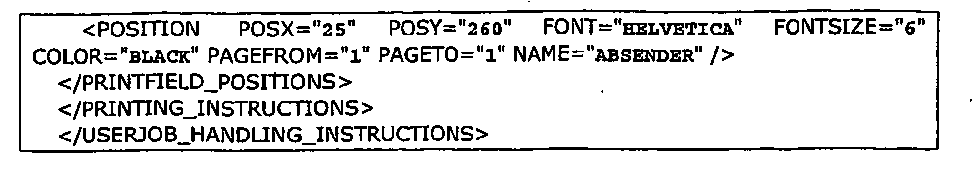

RecreateXML benutzt vorzugsweise einen Adressformatierer, um daraus Druckanweisungen zu generieren, die von dem PDF-Kernel verstanden werden. In dem PrintJob-File sehen die Printinstruktionen für die oben angegebene Datei beispielsweise wie folgt aus:

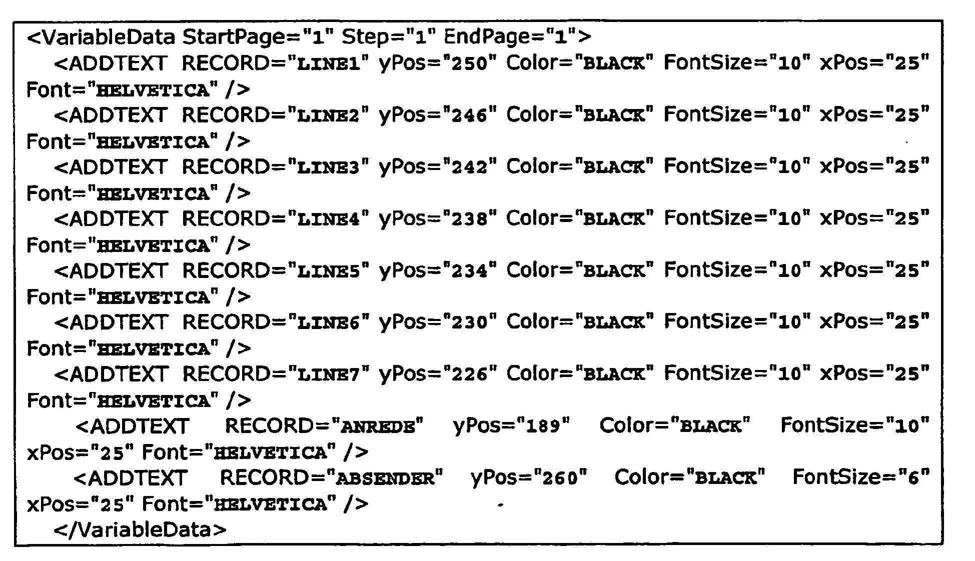

In der UserJob XML-Datei sehen die variablen Daten beispielsweise wie folgt aus:

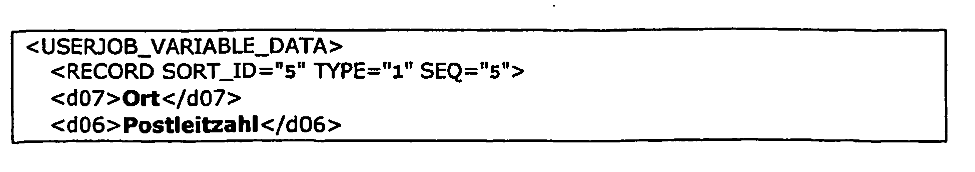

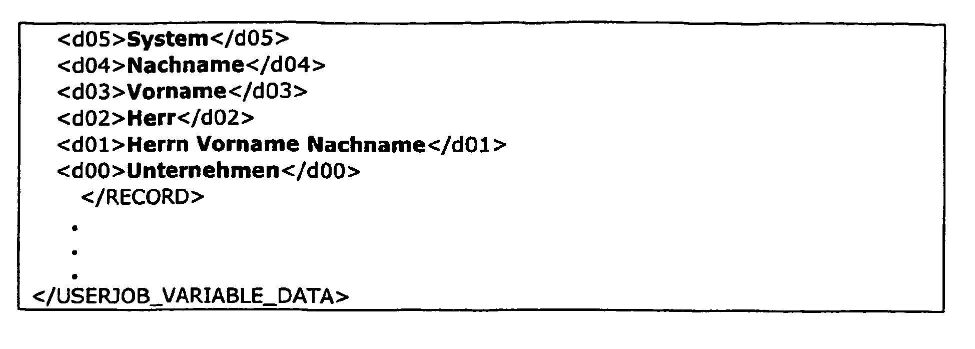

Unter Verwendung der Zuordnung in der *Print-Instruct-*Datei, generiert RecreateXML daraus Folgendes:

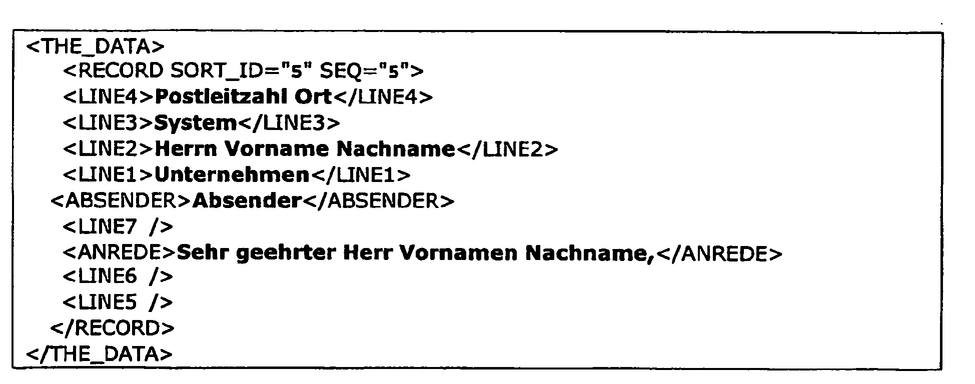

Dadurch stehen bei der Personalisierung während der Produktion die Daten in der Form zur Verfügung, wie sie der PDF-Kernel direkt verwenden kann.

Der QueueManager verwaltet für alle UserJobs, PrintJobs und Plys den Status. Der QueueManager wird über Statusänderungen von einem Datenmodell einer Oberfläche benachrichtigt. Dabei können beispielsweise folgende Status auftreten:

| Status | Anzeige in der Oberfläche |
|---|---|
| Intervention_Required | Eingriff notwendig |
| Not_Produceable | Produktion nicht möglich |
| Waiting | Wartend |
| Downloaded | Heruntergeladen |
| Failed | Produktion fehlgeschlagen |
| Ready_For_Download | Herunterladbar |
| Cancelled | Cancelled |
| Preprocessing | In Pre-Produktion |
| Preprocessed | Pre-Produziert |
| Printed | Gedruckt |
| Delivered | Ausgeliefert |

Es hat sich ferner als zweckmäßig erwiesen, dass der QueueManager bei Statusänderungen von UserJobs und PrintJobs für die UserJobs ein Attribut *Percentage* setzt. Dieses Attribut gibt die Fertigstellung des UserJobs in Prozent an. Bei der Synchronisation mit dem Server 20 wird für jeden UserJob dieser Wert übermittelt. Die Status von UserJob und PrintJob in Verbindung mit dem Prozentanteil der Fertigstellung sind in folgender Tabelle dargestellt:

| UserJob Status | Status der zugehörigen PrintJobs | Prozent der Fertigstellung |
|---|---|---|
| Intervention_Required | - | 10 |
| Not_Produceoble | - | 0 |
| Waiting | Waiting | 10 |
| Downloaded | - | 5 |
| Failed | | |
| Ready_For_Download | - | 0 |
| Canceled | | Letzter Wert vor Stornierung |
| Preprocessing | Preprocessing | 10 |
| Preprocessed | Preprocessed | 10 |
| Preprocessed | Preprocessed / Printed | 10-95 abhängig von der Anzahl der fertigen PrintJobs |
| Printed | Printed | 95 |
| Delivered | Delivered | 100 |

Besonders vorteilhaft ist es, wenn Benutzer des erfindungsgemäßen Druckauftragerzeugungsmittels 15 innerhalb eines Drucksystems 10 die Produktion über eine Benutzeroberfläche überblicken und steuern können. Die Oberfläche kann beispielsweise unter Verwendung von Java Swing implementiert werden. Die Daten für die Oberfläche werden dabei beispielsweise von einer Klasse *DataModel* (Datenmodell) verwaltet, welche zu Ermittlung von Werten den QueueManager befragt.

Vorteilhaft ist ferner, dass sich ein Benutzer über ein Menü am SOAP-Server anmelden, abmelden und das Programm beenden kann. Diese Funktionen werden vorzugsweise in einer Toolbar-Leiste verfügbar gemacht. Beim Anmelden kann beispielsweise eine Dialog-Box geöffnet werden, in der Username und Passwort einzugeben sind. Mit diesen Angaben versucht das System, sich über eine Methode *authenticateUser* vom ServerProxy am SOAP-Server anzumelden. Gelingt die Anmeldung, werden die Benutzerinformationen im Datenmodell gespeichert. Diese Benutzerinformationen werden bei weiterer Kommunikation mit dem Server verwendet. Bei einem Fehler erscheint zweckmäßigerweise ein Dialog mit einer Fehlermeldung.

Vorteilhaft ist es dabei, eine Funktion "Abmelden" zu implementieren, die Benutzerinformation aus dem Datenmodell löscht, so dass keine Kommunikation ohne erneute Anmeldung mit dem Server mehr möglich ist. Eine weitere Funktion "Abmelden und Beenden" prüft beispielsweise, ob noch Produktions-Threads laufen. Falls noch Threads vorhanden sind, erfolgt eine weitere Abfrage, ob das Programm beendet werden soll. Das Programm wird beispielsweise mit System.exit(0) beendet.

Über eine Combo-Box können beispielsweise drei verschiedene Sichten auf die UserJobs erstellt werden. Für alle Sichten gibt es in der Haupt-Frame Klasse (FrmApplikation) innere Modell-Klassen. Das Hauptframe initialisiert mehrere ChangeListener, die bei einer Änderung der UserJob-Selektion und einer UserJob-Status-Änderung die möglichen Aktionen setzen. Die möglichen Aktionen werden vom Datenmodell erfragt. Das Datenmodell leitet die möglichen Aktionen von dem Status der selektierten UserJobs, den es vom QueueManager erfragt, ab.

Über das UserJob Menü können UserJobs heruntergeladen, zu PrintJobs umgewandelt, storniert, auf nicht produzierbar gesetzt, zurückgesetzt und mit einem Wizard produziert werden. Alle Aktionen können auch über eine Toolbar-Leiste ausgelöst werden. Die möglichen Aktionen hängen von dem Status der selektierten UserJobs ab.

Die Zuordnungen zwischen UserJob-Status und möglicher Aktion sind in folgender Tabelle dargestellt:

| Status der selektierten UserJobs | Mögliche Aktionen |
|---|---|
| Herunterladbar | Herunterladen, Produktions-Wizard |
| | |
| Heruntergeladen | Neuen PrintJob anlegen (Falls alle selektierten UserJob zu einem PrintJob zusammengefasst werden dürfen), Stornieren, Produktionswizard |
| Wartend | - |
| Pre-Produziert | - |
| Gedruckt | - |
| Ausgeliefert | - |
| Eingriff notwendig | UserJob nicht produzierbar |
| Produktion fehlgeschlagen | - |
| Canceled | Zurücksetzen |

Die Auswirkungen der UserJob-Aktionen sind in der folgenden Tabelle dargestellt:

| Aktion | Auswirkung |
|---|---|
| Herunterladen | Die selektierten UserJobs werden in einem eigenen Thread durch Aufruf der exportUserJob Methode vom PartnerServerProxy heruntergeladen. Der QueueManager wird benachrichtigt, dass die UserJobs heruntergeladen sind. |
| Neuen PrintJob anlegen | Aus den selektierten UserJobs wird ein oder mehrere PrintJob erstellt. Dabei entstehen neue XML-Dateien, in denen die UserJob-Files dekodiert sind und mit der Klasse RecreateXML in ein neues vom PDF-Kernel lesbares XML-Format gewandelt werden. Danach wird der QueueManager benachrichtigt, aus welchen UserJobs welche PrintJobs wurden. |
| UserJob nicht produzierbar | Es wird die Art des Fehlers und ein Kommentar abgefragt. Der QueueManager wird benachrichtigt. |
| Produktionswizard | Der Wizard wird gestartet, der alle selektierten UserJobs herunterlädt, jeweils einen PrintJob erzeugt und diesen produziert. |
| Stornieren | Der QueueManager wird benachrichtigt, dass die selektierten UserJobs storniert werden sollen. |

Besonders vorteilhaft ist ferner der Einsatz eines Produktionswizards. Der Produktions-Wizard gruppiert alle selektierten UserJobs nach Produkten. Falls kein UserJob selektiert wurde, werden alle UserJobs benutzt. Zu der Gruppierung benutzt der Wizard beispielsweise die Attribute *PRINT_MODE, PRINT_COLOR* und *PRINT_FORMAT.* Die folgende Tabelle stellt die Wizard-Produkte und ihre Atrribute dar:

| Wizard-Produkt | PRINT_MODE | PRINT_COLOR | PRINT_FORMAT |
|---|---|---|---|
| farbig, simplex | SIMPLEX | 4C | DIN A4 |
| farbig, duplex | DUPLEX | 4C | DIN A4 |
| s/w , simplex | SIMPLEX | BW | DIN A4 |
| s/w , duplex | DUPLEX | BW | DIN A4 |
| Funcard | - | - | DIN A6 |

Die Sicht auf die PrintJobs kann ebenfalls über eine ComboBox auswählbar gemacht werden. Die Sichten und das Aktions-Handling sind wie bei den UserJobs implementiert, mit dem Unterschied, dass die Werte für PrintJobs vom QueueManager erfragt werden.

Die möglichen Aktionen hängen von dem Status der selektierten PrintJobs ab. In der folgenden Tabelle ist die Zuordnung zwischen PrintLob-Status und möglicher Aktion dargestellt:

| Status der selektierten Print Jobs | Mögliche Aktionen |
|---|---|
| Wartend | Produzieren, Auflösen, Drucker wechseln |
| Pre-Produziert | Druckwiederholung, Auflösen, Zurücksetzen |
| Gedruckt | Druckwiederholung, Ausliefern, Auflösen |
| Eingriff notwendig | Produzieren, Auflösen, Zurücksetzen |

Die folgende Tabelle zeigt die Auswirkungen der PrintJOb-Aktionen:

| Aktion | Auswirkung |
|---|---|
| Produzieren | Der PDF-Kernel wird angewiesen, den PrintJob zu produzieren. Der QueueManager wird über das Ergebnis der Produktion informiert. |
| Druckwiederholung | Der PDF-Kemel wird angewiesen, einen Teil des PrintJobs zu produzieren. Der QueueManager wird über das Ergebnis der Produktion informiert. |
| Ausliefern | Der QueueManager wird benachrichtigt, dass der PrintJob ausgeliefert wurde. |
| Drucker ändern | Der QueueManager wird benachrichtigt, den Drucker zu setzen. Es werden nur Drucker zur Auswahl angezeigt, auf denen der PrintJob produzierbar ist. Die Drucker werden vom QueueManager abgefragt. |
| Zurücksetzen | Der QueueManager wird benachrichtigt, den PrintJob zurückzusetzen. |

Eine vorteilhafte Ausführungsform der Erfindung ist ferner, dass ein Benutzer über ein Server-Menü synchronisieren und den lokalen Cache zurücksetzen kann.

Wird eine Synchronisation durchgeführt, sendet das Druckauftragerzeugungsmittel zunächst alle Status und den Grad der Fertigstellung in Prozent der lokalen UserJobs unter Verwendung des ServerProxy an den Server. Hat ein UserJob den Status *CANCELED, FAILED* oder *DELIVERED*, wird der QueueManager anschließend angewiesen, diese Jobs lokal zu löschen. Nach der Status-Übermittlung fragt das Druckauftragerzeugungsmittel alle herunterladbaren "Exportable" UserJobs ab. Falls ein herunterladbarer UserJob noch nicht lokal vorhanden ist, wird der QueueManager beauftragt, diesen anzulegen. Danach werden die Attribute von diesem neuen UserJob vom Server erfragt und dem QueueManager mitgeteilt. Falls bei der Abfrage der Attribute ein Fehler auftritt, wird der QueueManager beauftragt, diesen UserJob auf *NOTPRODUCEABLE* zu setzen.

Im nächsten Schritt fragt das Druckauftragerzeugungsmittel die Liste der bereits heruntergeladenen UserJobs vom SOAP-Server ab. Falls UserJobs, die bereits heruntergeladen wurden, nicht mehr lokal vorhanden sind, werden die UserJobs über den QueueManager neu angelegt und heruntergeladen. Dies kann beispielsweise auftreten, wenn die lokalen Dateien des QueueManagers gelöscht werden. Falls es lokale UserJobs gibt, die nicht in der Liste der heruntergeladenen UserJobs sind, werden diese UserJobs lokal gelöscht.

Wenn der lokale Cache zurückgesetzt wird, werden zunächst alle PrintJobs aufgelöst. Danach werden alle Dateien, die der QueueManager verwaltet, gelöscht. Nach dem nun folgenden Neustart des QueueManagers wird eine Synchronisation durchgeführt, bei der allerdings das Übermitteln der Status an den SOAP-Server entfällt.

In einem besonders bevorzugten Ausführungsbeispiel der Erfindung werden alle Fehler, die innerhalb des Druckauftragerzeugungsmittels auftreten, dem Benutzer in einem Dialog angezeigt. Außerdem werden die Fehler mit Datum vorzugsweise in einer Log-Datei gespeichert. Die Datei heißt beispielsweise Error.log und liegt in einem Verzeichnis, das in der Konfiguration unter *errorpath* angegeben ist.

Vorzugsweise werden alle für die Produktion verwendeten Informationen in einem JobEnvironment gespeichert. Dabei werden zuerst alle im PrintJob enthaltenen UserJobs in Datenobjekten einer Klasse UserJobData gespeichert. Diese Datenobjekte bieten einen Zugriff auf alle für die Produktion wichtigen UserJob-Daten. Damit die gesamte Anzahl bekannt ist, wird von allen UserJobs die Anzahl der Adressen, Seiten und Blätter addiert und gespeichert.

JobEnvironment analysiert, wie viele Briefe für ein jeweiligse Infopostkriterium Infobrief, Infopost oder Standard vorgesehen sind. Aus jeder Adresse wird ein Datenobjekt einer Klasse Letter erzeugt. Für den weiteren Produktionsverlauf stellt JobEnvironment Methoden zur Verfügung, um bestimmte Information über die UserJob abzufragen.

Die Klasse Letter enthält Information für einen Brief. Dazu gehören beispielsweise Personalisierungsinformationen, Anzahl der Briefseiten, das Infopostkriterium, UserJobID und die Position innerhalb des UserJobs. Das JobEnvironment verwaltet eine Liste mit Letter-Objekten für alle Briefe.

Vorzugsweise enthält ein Objekt der Klasse UserJobData alle Daten eines UserJobs. Dazu gehören alle UserJob-Attribute, Porto-, Preis- und Firmeninformationen. Das JobEnvironment besitzt eine Liste UserJobs mit allen UserJobData-Objekten des Jobs. Die Klasse UserJobData bietet Methoden, um auf die UserJob-Informationen zuzugreifen.

Zur Verwaltung der PDF-Seiteninhalte ist die Verwendung einer Klasse PageContent zweckmäßig. Objekte dieser Klasse beschreiben für eine Seite, welche Briefe sich auf der Seite auf welcher Position befinden. Es ist möglich, dass sich auf einer Seite nach dem Durchführen von Impositioning mehrere Briefe befinden.

Vorzugsweise werden mit Hilfe einer Hashtabelle *DocumentsContent* die Seiteninhalte für jede PDF-Datei verwaltet. Darin werden für alle PDF-Dokument die Dateinamen und eine Liste von *PageContent* abgelegt. Erstellt werden diese vorzugsweise von einem PDFLayer. Die Informationen dienen für eine OMR und SDL-Erstellung und zur Erstellung einer PDF-Vorlage mit statischem Inhalt.

Es ist ferner vorteilhaft, für eine vorhandene PDF-Datei mit Personalisierungsdaten an einer beliebigen Stelle eine PDF-Vorlage mit den statischen Inhalten zu erzeugen. Dabei wird untersucht, welche Vorlagenseiten benötigt werden. In *VariableToTemplateMatch* wird festgehalten, welche personalisierte Seite zu einer statischen Seite gehört. Die Information wird eventuell bei einer späteren Erzeugung eines Book-Tickets benötigt. In *varToTemplateMatchArray* werden für jeden Loop-Durchlauf die *VariableToTemplateMatch* eingetragen.

Nachdem das JobEnvironment gesetzt wurde, werden vom PDF-Kernel die druckbaren Dateien anhand des virtuellen Druckers, der in der Konfiguration ist, erstellt. Dafür hat der Kernel in einer besonders bevorzugten Ausführungsform der Erfindung mehrere Ebenen. Auf der obersten Ebene (JobHandler) wird der virtuelle Drucker ausgewählt, der PrintJob eingelesen und das JobEnvironment initialisiert. Danach arbeitet der JobHandler die *PrepareDocumentStep*-Einträge des virtuellen Druckers schrittweise ab. Auf dieser Ebene werden die Einträge *NewPDF, Loop, Workflow, Personalize, CreateTemplatePDF, PersonalizeOnTemplate, Repeat* und *OpenPDF* erkannt, und in Abhängigkeit von dem Schlüsselwort wird eine Methode der nächsten Ebene aufgerufen. Auf der nächsten Ebene (DocumentHandler) werden die Anweisungen, die innerhalb der oben genannten Einträge stehen, ausgewertet. Die Einträge, die in diesen Einträgen stehen, werden von einer weiteren Ebene (PDFDocument) ausgewertet. PDFDocument benutzt PDFLayer, um die Dokumente zu öffnen und zu erstellen.

Zum Erstellen und Einlesen der PDF-Dateien wurde in einem besonders bevorzugten Ausführungsbeipiel der Erfindung eine externe Bibliothek *PDFLib* eingebunden. Diese Bibliothek ermöglicht ein einfaches Erstellen von PDF-Dokumenten durch Funktionsaufrufe. Vorhandene PDF-Seiten können damit auch in neue PDF-Dokumente eingefügt werden. Die Zugriffe auf diese Bibliothek laufen vorzugsweise alle über einen PDFAccessLayer. Dadurch ist der restliche Code unabhängig von der Bibliothek, und bei einer eventuellen Umstellung auf eine andere Bibliothek muss nur das Layer angepasst werden.

Das Layer ist auch verantwortlich für das Setzen von *DocumentsContent* im JobEnvironment. Bei jedem Anlegen einer neuen PDF-Datei wird ein leerer *PageContent* erzeugt und dem JobEnvironment mit dem Dateinamen mitgeteilt. Beim Personalisieren wird dem PDFLayer mitgeteilt, welche Briefseite platziert wird. Das PDFLayer erzeugt ein entsprechendes PageContent und gibt dieses an JobEnvironment. Bei jedem Öffnen einer vorhandenen Datei holt sich das PDFLayer vom JobEnvironment die Seiteninhalte (PageContent). Wird von diesem Dokument eine Seite in ein neues Dokument kopiert, berechnet der PDFLayer die Position der Seite auf der neuen Seite und generiert damit ein PageContent.

Zur Konvertierung der PDF-Dateien nach Postscript hat es sich als zweckmäßig erwiesen, eine DLL *pdf2ps_java* unter C zu verwenden. Diese DLL kann beispielsweise die Programme Adobe Acrobat und Acrobat Reader ansprechen. Die DLL öffnet die Programme und weist sie an, eine PDF-Datei nach Postscript zu wandeln. Die DLL wird von der Klasse *Pdf2PsNativelnterface* geladen. Die Klasse *Pdf2PsConverter* benutzt *Pdf2PsNativeInterface* und stellt eine Konvertierungsmethode zur Verfügung.

### Bezugszeichenliste:

- 10: Drucksystem
- 11: Drucker
- 12: Sortieranlage
- 13: Kuvertieranlage
- 14: Druckverarbeitungskomponente
- 15: Druckauftragerzeugungsmittel
- 16: Erste Nachricht
- 17: Zweite Nachricht
- 18: Call-Klasse
- 20: Server
- 21: Web-Server
- 22: Proxy-Server
- 30: Datenbank
- 40: Erste Schnittstelle
- 50: Zweite Schnittstelle
- 60: Internet

## Patentansprüche

1. System zur automatisierten Erzeugung von druckbaren Dateien aus Daten einer Datenbank (30), das ein Drucksystem (10) bestehend aus wenigstens einer Druckverarbeitungskomponente (14) umfasst, wobei die Druckverarbeitungskomponente (14) Mittel zum Ausdrucken und/oder Weiterverarbeiten der druckbaren Dateien aufweist, **gekennzeichnet durch** folgende Merkmale:
- das Drucksystem (10) weist wenigstens ein Druckauftragerzeugungsmittel (15) auf, wobei das Druckauftragerzeugungsmittel ein Programm auf wenigstens einem Computer des Drucksystems (10) ist,
- das Druckauftragerzeugungsmittel (15) ist über das Internet und eine erste Schnittstelle (40) mit einem Server (20) verbindbar, wobei die erste Schnittstelle (40) eine SOAP (Simple Object Access Protocol)-Schnittstelle und der Server (20) ein SOAP-Server ist und die SOAP-Schnittstelle als Datenübertragungsprotokoll http/HTTPS einsetzt,
- der Server (20) ist über eine zweite Schnittstelle (50) mit einer Datenbank (30) verbindbar, wobei sich die Datenbank (30) außerhalb des Bereiches des Drucksystems (10) befindet und die zweite Schnittstelle (50) ein PL/SQL(Procedual Language/Structured Query Language)-Layer ist,
- das Druckauftragerzeugungsmittel (15) weist Mittel zum Anfordern und Empfangen von Daten aus der Datenbank (30) auf, und
- das Druckauftragerzeugungsmittel (15) weist Mittel zur Aufbereitung der Daten der Datenbank (30) für die Anforderungen der Druckverarbeitungskomponente (14) und Mittel zur Erzeugung von druckbaren Dateien auf.

2. Verfahren zur automatisierten Erzeugung von druckbaren Dateien aus Daten einer Datenbank (30), bei dem die Dateien von einem Drucksystem (10) bestehend aus wenigstens einer Druckverarbeitungskomponente (14) und einem Druckauftragerzeugungsmittel (15) erzeugt, ausgedruckt und/oder weiterverarbeitet werden, **gekennzeichnet durch** folgende Schritte:
- das Druckauftragerzeugungsmittel (15) erzeugt eine erste Nachricht (16), die einen Aufruf einer bestimmten Methode mit Parametern an einem Server (20) beinhaltet,
das Druckauftragerzeugungsmittel (15) stellt über das Internet und eine erste Schnittstelle (40) eine Verbindung zu dem Server (20) her, wobei der Server (20) ein SOAP-Server ist,
- das Druckauftragerzeugungsmittel (15) übermittelt dem Server (20) die erste Nachricht (16) über die erste Schnittstelle (40), wobei die Kommunikation zwischen dem Druckauftragerzeugungsmittel (15) und dem Server (20) über eine SOAP-Schnittstelle erfolgt,
- der Server (20) verarbeitet die erste Nachricht (16), indem er die bestimmte Methode mit den zugehörigen Parametern aufruft,
- der Server (20) stellt über eine zweite Schnittstelle (50) eine Verbindung zu der Datenbank (30) her, wobei die Kommunikation zwischen dem Server (20) und der Datenbank (30) über ein PL/SQL(Procedural Language/Structured Query Language)-Layer erfolgt,
- der Server (20) ruft über die zweite Schnittstelle (50) Daten aus der Datenbank (30) ab,
- der Server gibt das Ergebnis des Aufrufs der bestimmten Methode in Form einer zweiten Nachricht (17) an das Druckauftragerzeugungsmittel (15) zurück, und
- das Druckauftragerzeugungsmittel (15) erzeugt aus dem Ergebnis des Aufrufs der bestimmten Methode wenigstens eine druckbare Datei.

3. Verfahren nach Anspruch 2, **dadurch gekennzeichnet, dass** die Kommunikation zwischen dem Druckauftragserzeugungsmittel (15) und dem Server (20) über eine Apache SOAP-API erfolgt.

4. Verfahren nach einem oder beiden der Ansprüche 2 und 3, **gekennzeichnet durch** folgende Schritte:
- das Druckauftragerzeugungsmittel (15) erzeugt eine erste Nachricht (16), indem es eine Instanz einer Call-Klasse (18) einer Apache SOAP-API aufruft und Eigenschaften dieses Objektes setzt,
- das Druckauftragerzeugungsmittel (15) übermittelt dem Server (20) die erste Nachricht (16),
- auf Seiten des Servers (20) nimmt ein Web-Server (21) die erste Nachricht (16) mit dem Aufruf an und wertet diese aus,
- der gesendeten URL wird ein rpcrouter-Servlet der Apache SOAP-API zugeordnet, bei dem das Server-SOAP-Objekt bekannt ist,
- der Aufruf wird diesem Servlet übergeben,
- das rpcrouter-Servlet analysiert die erste SOAP-Nachricht (16), bestimmt die aufzurufende Klasse und instanziiert diese.
- Die gewünschte Methode wird mit den übergebenen Parametern aufgerufen.
- Der Rückgabewert wird in eine zweite SOAP-Nachricht (17) umgewandelt und diese wird als Antwort per HTTP zurückgeliefert,
- die clientseitige Instanz der Call-Klasse (18) analysiert die zweite Nachricht (17) und gibt das entstandene Ergebnis zurück an das Druckauftragerzeugungsmittel (15).

## Claims

1. A system for the automatic generation of printable files from data in a database (30), said system comprising a printing system (10) consisting of at least one print processing component (14), whereby the print processing component (14) has means for printing and/or further processing the printable files, **characterized by** the following features:
• the printing system (10) has at least one print job generation element (15), whereby the print job generation element is a program on at least one computer of the printing system (10),
• the print job generation element (15) can be connected to a server (20) via the Internet and via a first interface (40), whereby the first interface (40) is a SOAP (Simple Object Access Protocol) interface, while the server (20) is a SOAP server, and the SOAP interface uses http/https as the data transmission protocol,
• the server (20) can be connected to a database (30) via a second interface (50), whereby the database (30) is located outside of the area of the printing system (10) and the second interface (50) is a PL/SQL (Procedural Language/Structured Query Language) layer,
• the print job generation element (15) has means for requesting and receiving data from the database (30), and
• the print job generation element (15) has means for preparing the data from the database (30) as a function of the requirements of the print processing component (14) and it also has means for generating printable files.

2. A method for the automatic generation of printable files from data in a database (30), by means of which the files are generated, printed out and/or further processed by a printing system (10) consisting of at least one print processing component (14) and one print job generation element (15), **characterized by** the following steps:
• the print job generation element (15) generates a first message (16) that contains a call to a server (20) for a specific method with parameters,
• the print job generation element (15) establishes a connection to the server (20) via the Internet and via a first interface (40), whereby the server (20) is a SOAP server,
• the print job generation element (15) transmits the first message (16) to the server (20) via the first interface (40), whereby the communication between the print job generation element (15) and the server (20) takes place via a SOAP interface,
• the server (20) processes the first message (16) in that it calls the specific method with the appertaining parameters,
• the server (20) establishes a connection to the database (30) via a second interface (50), whereby the communication between the server (20) and the database (30) takes place via a PL/SQL (Procedural Language/Structured Query Language) layer,
• the server (20) retrieves data from the database (30) via the second interface (50),
• the server sends the result of the call for the specific method in the form of a second message (17) back to the print job generation element (15), and
• the print job generation element (15) generates at least one printable file from the result of the call for the specific method.

3. The method according to Claim 2, **characterized in that** the communication between the print job generation element (15) and the server (20) takes place via an Apache SOAP API.

4. The method according to one or both of Claims 2 and 3, **characterized by** the following steps:
• the print job generation element (15) generates a first message (16) by calling an instance of a call class (18) of an Apache SOAP API and sets properties of this object,
• the print job generation element (15) transmits the first message (16) to the server (20),
• on the part of the server (20), a web server (21) accepts the first message (16) with the call and evaluates it,
• the sent URL is associated with the Apache SOAP API's RPC router-servlet where the server-SOAP object is known,
• the call is transmitted to this servlet,
• the RPC router-servlet analyzes the first SOAP message (16), determines the class to be called and instantiates it,
• the desired method with the transmitted parameters is called,
• the return value is converted into a second SOAP message (17) and this is returned as a response via http,
• the instance of the call class (18) on the client side analyzes the second message (17) and returns the obtained result to the print job generation element (15).

## Revendications

1. Système pour la création automatisée de fichiers imprimables à partir de données issues d'une base de données (30), comprenant un système d'impression (10) consistant en au moins un composant de traitement de l'impression (14), le composant de traitement de l'impression (14) comportant des moyens pour l'impression et/ou pour le traitement ultérieur des fichiers imprimables, **caractérisé par** les attributs suivants :
- le système d'impression (10) comporte au moins un moyen de création d'un ordre d'impression (15), le moyen de création d'un ordre d'impression étant un programme sur au moins un ordinateur du système d'impression (10),
- le moyen de création d'un ordre d'impression (15) est susceptible d'être relié via Internet et une première interface (40) avec un serveur (20), la première interface (40) étant une interface SOAP (Simple Object Access Protocol) et le serveur (20) étant un serveur SOAP et l'interface SOAP utilisant le protocole de transfert de données http/HTTPS,
- le serveur (20) est susceptible d'être relié via une deuxième interface (50) avec une base de données (30), la base de données (30) se trouvant à l'extérieur de la région du système d'impression (10) et la deuxième interface (50) étant une couche PL/SQL (Procedural Language/Structured Query Language),
- le moyen de création d'un ordre d'impression (15) comporte des moyens pour demander et pour réceptionner des données issues de la base de données (30) et
- le moyen de création d'un ordre d'impression (15) comporte des moyens pour préparer les données de la base de données (30) aux exigences du composant de traitement de l'impression (14) et des moyens pour créer des données imprimables.

2. Procédé pour la création automatisée de fichiers imprimables à partir de données issues d'une base de données (30), dans lequel les fichiers sont créés, imprimés et/ou traités ultérieurement par un système d'impression (10) consistant en au moins un composant de traitement de l'impression (14) et en un moyen de création d'un ordre d'impression (15), **caractérisé par** les étapes suivantes :
- le moyen de création d'un ordre d'impression (15) crée une première information (16), contenant un appel d'une méthode déterminée avec des paramètres à un serveur (20),
- via Internet et une première interface (40), le moyen de création d'un ordre d'impression (15) établit une liaison avec le serveur (20), le serveur (20) étant un serveur SOAP,
- le moyen de création d'un ordre d'impression (15) transmet au serveur (20) la première information (16) au sujet de la première interface (40), la communication entre le moyen de création d'un ordre d'impression (15) et le serveur (20) étant assurée par l'intermédiaire d'une interface SOAP,
- le serveur (20) traite la première information (16), en appelant la méthode déterminée avec les paramètres correspondants,
- le serveur (20) établit par l'intermédiaire d'une deuxième interface (50) une liaison vers la base de donnée (30), la communication entre le serveur (20) et la banque de données (30) étant assurée par l'intermédiaire d'une couche PL/SQL(Procedural Language/Structured Query Language),
- par l'intermédiaire de la première interface (50), le serveur (20) appelle des données à partir de la base de données (30),
- le serveur restitue le résultat de l'appel de la méthode déterminée sous la forme d'une deuxième information (17) au moyen de création d'un ordre d'impression (15), et à partir du résultat de l'appel de la méthode déterminée,
- le moyen de création d'un ordre d'impression (15) créé au moins un fichier imprimable.

3. Procédé selon la revendication 2, **caractérisé en ce que** la communication entre le moyen de création d'un ordre d'impression (15) et le serveur (20) est assurée par l'intermédiaire d'un Apache SOPA-API.

4. Procédé selon l'une quelconque ou les deux revendications 2 et 3, **caractérisé par** les étapes suivantes :
- le moyen de création d'un ordre d'impression (15) crée une première information (16) en appelant une instance d'une classe Call (18) d'une Apache SOAP-API et en plaçant des caractéristiques de cet objet,
- le moyen de création d'un ordre d'impression (15) transmet au serveur (20) la première information (16),
- du côté du serveur (20), un serveur Web (21) accepte la première information (16) avec l'appel et l'évalue,
- à l'URL envoyée est associée un RPCrouter-Servlet de l'Apache SOAP-API, auprès duquel l'objet de serveur SOAP est connu,
- l'appel est transmis à ce Servlet,
- le RPCrouter-Servlet analyse la première information SOAP (16), détermine la classe à appeler et la met en instance.
- La méthode souhaitée est appelée avec les paramètres transmis.
- La valeur renvoyée est convertie en une deuxième information SOAP (17) et cette dernière est fournie en retour par HTTP en tant que réponse,
- l'instance côté client de la classe Call (18) analyse la deuxième information (17) et renvoie le résultat obtenu au moyen de création d'un ordre d'impression (15).
